(19) Europäisches Patentamt
European Patent Office
Office européen des brevets

(11) **EP 3 285 533 B1**

(12) **EUROPEAN PATENT SPECIFICATION**

(45) Date of publication and mention
of the grant of the patent:
**19.08.2020 Bulletin 2020/34**

(51) Int Cl.:
**H04W 72/12** *(2009.01)* **H04W 72/04** *(2009.01)*
**H04L 5/00** *(2006.01)* **H04L 27/26** *(2006.01)*
**H04W 72/06** *(2009.01)*

(21) Application number: **15891537.1**

(22) Date of filing: **14.05.2015**

(86) International application number:
**PCT/CN2015/078965**

(87) International publication number:
**WO 2016/179834 (17.11.2016 Gazette 2016/46)**

(54) **TERMINAL, BASE STATION, AND CONFIGURATION AND TRANSMISSION METHOD FOR SOUNDING REFERENCE SIGNAL**

ENDGERÄT, BASISSTATION UND KONFIGURATIONS- UND ÜBERTRAGUNGSVERFAHREN FÜR KLANGREFERENZSIGNAL

TERMINAL, STATION DE BASE ET PROCÉDÉ DE CONFIGURATION ET D'ÉMISSION POUR UN SIGNAL DE RÉFÉRENCE DE SONDAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.02.2018 Bulletin 2018/08**

(73) Proprietor: **Huawei Technologies Co., Ltd.**
**Longgang District**
**Shenzhen, Guangdong 518129 (CN)**

(72) Inventors:
• **LI, Yuanjie**
 **Shenzhen**
 **Guangdong 518129 (CN)**
• **WANG, Ting**
 **Shenzhen**
 **Guangdong 518129 (CN)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**EP-A1- 3 282 663** **CN-A- 102 300 224**
**CN-A- 102 378 383** **CN-A- 103 220 794**
**US-A1- 2012 014 349** **US-A1- 2014 112 168**
**US-A1- 2014 119 302**

• **KDDI ET AL: "Way Forward on UE-specific configurations for SRS", 3GPP DRAFT; R1-122981, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 25 May 2012 (2012-05-25), XP050601209, [retrieved on 2012-05-25]**
• **HUAWEI: "Views on SRS capacity enhancements in Rel.10", 3GPP DRAFT; R1-101076, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418641, [retrieved on 2010-02-16]**

**Description**

**TECHNICAL FIELD**

The present invention relates to the field of wireless communications technologies, and in particular, to a terminal and sounding reference signal (Sounding Reference Signal, SRS) transmission method.

**BACKGROUND**

A sounding reference signal SRS is an uplink sounding reference signal in a Long Term Evolution (Long Term Evolution, LTE) system. A base station performs uplink channel estimation according to an SRS sent by a terminal. In addition, in a time division duplex (Time Division Duplexing, TDD) LTE system, because of reciprocity between an uplink channel and a downlink channel, a base station may also perform downlink channel estimation according to an SRS, and further, may also schedule downlink transmission according to a result of the downlink channel estimation.

In SRS transmission modes in a current LTE system, there are a relatively small quantity of physical resources that can be used to transmit an SRS, and transmission requirements of a short-delay system, a millimeter-wave system, and the like cannot be met. Therefore, an SRS transmission mode that meets requirements for uplink channel quality measurement and channel estimation in a short-delay system and a millimeter-wave system is required urgently. US 2012/0014349 A1 relates to a wireless communication system. US 2014/0112168 A1 relates to enhanced SRS transmission for MIMO operation in LTE-A. EP 3 282 663 A1 which is a document only available under Art. 54 (3) EPC for the present invention relates to a method for transmitting or receiving a sounding reference signal in a wireless communication system and an apparatus therefor. "Views on SRC capacity enhancements in Rel. 10" (Huawei, 3GPP Draft; R1-101076, 3RD Geneneration Partnership Project, 3GPP, Mobile Competence Cetnre; 650, Route de Lucioles; F-06921 Sophia-Antipolis CEDEX; France; vol. RAN WG1, no. San Francisco; USA; Feb. 222-26, 2010) relates to possible SRS enhancements.

**SUMMARY**

The invention is defined by the appended claims. Aspects of the present disclosure provide a terminal, an SRS transmission method and a computer-readable storage medium, so as to provide more SRS transmission resources, and meet requirements for uplink channel quality measurement and channel estimation in, for example, a short-delay system and a millimeter-wave system.

According to a first aspect, an aspect of the present disclosure provides a sounding reference signal SRS transmission method, as defined in claim 1.

According to a second aspect, an aspect of the present disclosure provides a terminal, including: a processor, a memory, and a transceiver, where

the memory is configured to store an instruction; and

the processor is configured to execute the instruction stored in the memory, to control the transceiver to send and receive a signal; and when the processor executes the instruction stored in the memory, the terminal is configured to complete the method provided according to any one of the aspects above.

To sum up, compared with that an SRS is located only on a last symbol of an uplink subframe or is located in an UpPTS of a special subframe in a current LTE system, more transmission resources can be used to transmit an SRS in the aspects of the present disclosure.

On one hand, as an antenna array of a base station becomes larger or a quantity of antennas of a terminal or a quantity of terminals increases, the current LTE system provides a relatively small quantity of resources that can be used to carry an SRS. By means of the solutions provided in the aspects of the present disclosure, demands of the current LTE system for resources used to carry an SRS can be met.

On the other hand, by means of the solutions provided in the aspects of the present disclosure, transmission requirements of a short-delay system, a millimeter-wave system, and the like can also be met, to implement accurate uplink channel quality measurement and channel estimation.

In addition, because an SRS subframe is configured separately, and all uplink symbols in the SRS subframe can be used to carry an SRS, a resource used to carry an SRS can be configured flexibly according to a quantity of terminals in a current system and requirements for channel measurement and estimation, so that implementation is more flexible.

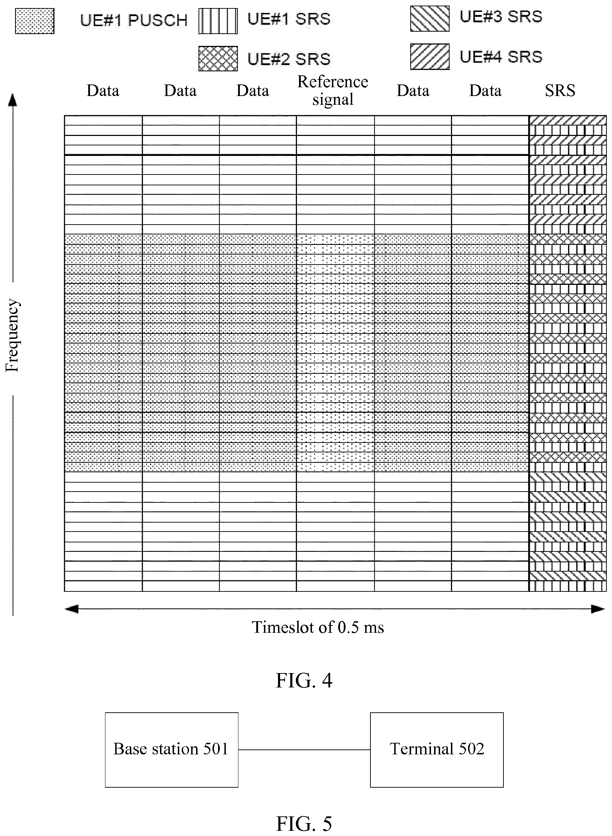

In addition, when an SRS is multiplexed with a channel such as a PUSCH or a physical uplink control channel (Physical Uplink Control CHannel, PUCCH), for example, an SRS is multiplexed with a PUSCH channel, as shown in FIG. 4, to prevent a conflict between an SRS and these channels, a complex collision mechanism is generally introduced. F or example, an SRS is dropped or some channels are dropped/punctured. Consequently, transmission performance

**EP 3 285 533 B1**

of a channel deteriorates. If a PUCCH of a shortened (shortened) format or the like is used, a complex determining mechanism further needs to be introduced.

Optionally, by means of the solutions provided in the aspects of the present disclosure, because relatively sufficient resources used to carry an SRS are provided, an SRS may be not multiplexed with a channel such as a PUSCH or a PUCCH. Therefore, use of a complex collision mechanism is avoided. Some channels may be not punctured or dropped, or an SRS may be not dropped, thereby ensuring transmission performance of a channel.

To sum up, a dedicated SRS subframe is provided in the aspects of the present disclosure, and an SRS is transmitted in the dedicated SRS subframe, so that coverage of an SRS is improved, and a conflict with another channel is prevented, thereby reducing implementation complexity. In addition, because more transmission resources are provided, a capability of supporting multiple antennas can also be improved.

## BRIEF DESCRIPTION OF DRAWINGS

FIG. 1A is a schematic diagram of transmission of an SRS only on a last symbol in an uplink subframe;

FIG. 1B is a schematic structural diagram of a radio frame;

FIG. 2 is a schematic diagram of SRS transmission using a comb structure;

FIG. 3 is a schematic diagram of SRS frequency hopping and SRS non-frequency hopping;

FIG. 4 is a schematic diagram of multiplexing of an SRS and a physical uplink shared channel (Physical Uplink Shared CHannel, PUSCH);

FIG. 5 is a schematic structural diagram of a wireless communications system according to an aspect of the present disclosure;

FIG. 6 is a schematic diagram of transmitting, by a terminal, SRSs by using uplink symbols that have an interval of two symbols from each other in an SRS subframe when a symbol configuration is a subframe-level configuration;

FIG. 7 is a schematic diagram of transmitting, by a terminal, SRSs by using uplink symbols that have an interval of two symbols from each other in an SRS subframe when a symbol configuration is a timeslot-level configuration and a same symbol transmission mode is used in two timeslots;

FIG. 8 is a schematic diagram of transmitting, by a terminal, an SRS when a symbol configuration is a timeslot-level configuration and only a first timeslot in an SRS subframe is used;

FIG. 9 is a schematic diagram of transmitting, by a terminal, an SRS when a symbol configuration is a timeslot-level configuration and only a second timeslot in an SRS subframe is used;

FIG. 10 is a schematic diagram of sending, by a terminal, an SRS during frequency multiplexing of different terminals or frequency multiplexing of different antennas of one terminal;

FIG. 11 is a schematic diagram of sending, by a terminal, an SRS when code division, time division, and frequency division are used at the same time;

FIG. 12 shows a timeslot-level frequency hopping manner in which SRSs sent by a terminal occupy same physical resource blocks (Physical Resource Block, PRB) and different comb subcarriers in different timeslots;

FIG. 13 shows a timeslot-level frequency hopping manner in which SRSs sent by a terminal occupy different PRBs and same comb subcarriers in different timeslots;

FIG. 14 shows a timeslot-level frequency hopping manner in which SRSs sent by a terminal occupy different PRBs and different comb subcarriers in different timeslots;

FIG. 15 shows a symbol-level frequency hopping manner in which SRSs sent by a terminal occupy same PRBs and same comb subcarriers on different symbols;

FIG. 16 shows a symbol-level frequency hopping manner in which SRSs sent by a terminal occupy same PRBs and different comb subcarriers on different symbols;

FIG. 17 shows a symbol-level frequency hopping manner in which SRSs sent by a terminal occupy different PRBs and same comb subcarriers on different symbols;

FIG. 18 shows a symbol-level frequency hopping manner in which SRSs sent by a terminal occupy different PRBs and different comb subcarriers on different symbols;

FIG. 19 is a flowchart of an SRS configuration method according to an aspect of the present disclosure;

FIG. 20 is a flowchart of an SRS transmission method;

FIG. 21 is a schematic structural diagram of a first base station;

FIG. 22 is a schematic structural diagram of a second base station;

FIG. 23 is a schematic structural diagram of a first terminal;

FIG. 24 is a schematic structural diagram of a second terminal according to an aspect of the present disclosure.

**DESCRIPTION**

Aspects of the present disclosure provide a terminal and SRS trasnsmission method, so as to provide more SRS transmission resources, and meet requirements for uplink channel quality measurement and channel estimation in, for example, a short-delay system and a millimeter-wave system.
In an aspect of the present disclosure, a base station sends configuration information of an SRS subframe to a terminal; and the terminal determines a configuration of the SRS subframe according to the received configuration information, and sends an SRS in the SRS subframe according to the determined configuration of the SRS subframe. The SRS subframe is an uplink subframe, or is a subframe in which a quantity of uplink symbols is not less than a quantity of downlink symbols; and all uplink symbols in the SRS subframe can be used to carry an SRS.

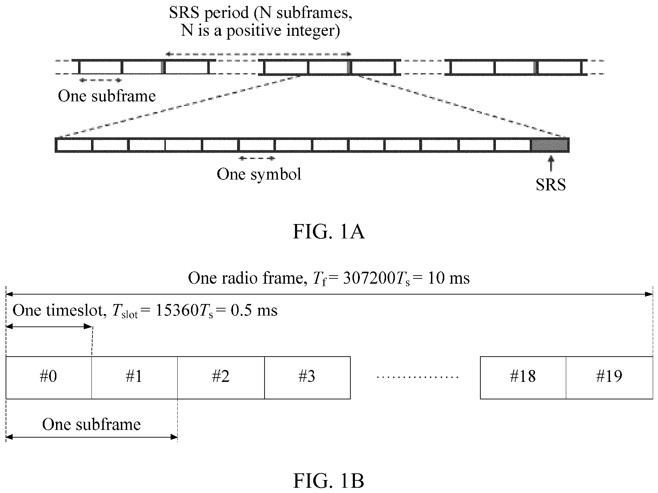

Currently, as shown in FIG. 1A, an SRS is transmitted only on a last symbol of an uplink subframe or is transmitted in a uplink pilot timeslot (Uplink Pilot Time Slot, UpPTS) of a special subframe. There are a relatively small quantity of physical resources that can be used to transmit an SRS in one radio frame, and transmission requirements of the following short-delay system and millimeter-wave system, and the like cannot be met. Detailed analyses are as follows:

On one hand, to reduce a data transmission delay and improve data transmission efficiency, a frame structure that is shorter than a radio frame in an existing LTE system may be used in future. For example, if a subframe length is 0.5 ms and a scheduling time unit is shortened, 1 ms is used as a scheduling time unit, two terminals can be scheduled in 1 ms, and four terminals can be scheduled in 1 ms for a frame structure of a subframe length of 0.5 ms. Therefore, a quantity of terminals that are scheduled in a unit of time is increased, and currently, there are a relatively small quantity of physical resources that can be used for an SRS. Consequently, it is possible that a terminal cannot send an SRS in a current subframe but can send an SRS only in a subsequent subframe, for example, a next subframe, leading to an inaccurate result of uplink channel quality measurement or channel estimation by a base station for the terminal. In addition, in a TDD system, if a base station schedules downlink transmission according to an SRS measurement result, next downlink scheduling by the base station for the terminal is delayed due to that the terminal cannot send an SRS in time. Consequently, a data transmission delay of the terminal is increased, and transmission efficiency of the terminal is lowered.

On the other hand, for both an existing LTE system and a future wireless communications system, a higher working band of the system indicates a higher propagation loss of a radio signal. When the system works in a millimeter-wave band, a frequency range of the band is usually from 3 GHz to 300 GHz, and a propagation loss of a radio signal is higher. In the existing LTE system, there are a relatively small quantity of physical resources that can be used for an SRS, and physical resources that can be used by a terminal to send an SRS are limited. In a wireless communications system having a relatively high propagation loss such as a millimeter-wave system, a limited SRS experiences a relatively high propagation loss, and energy of an SRS received by a base station is relatively low. Consequently, the base station cannot perform accurate channel quality measurement and channel estimation.

Compared with that an SRS is located only on a last symbol of an uplink subframe or is located in an UpPTS of a special subframe in a current LTE system, more transmission resources can be used to transmit an SRS in the embodiments of the present invention.

On one hand, as an antenna array of a base station becomes larger or a quantity of antennas of a terminal or a quantity of terminals increases, the current LTE system provides a relatively small quantity of resources that can be used to carry an SRS. By means of the solutions provided in the embodiments of the present invention, demands of the current LTE system for resources used to carry an SRS can be met.

On the other hand, by means of the solutions provided in the embodiments of the present invention, transmission requirements of a short-delay system, a millimeter-wave system, and the like can also be met, to implement accurate uplink channel quality measurement and channel estimation.

In addition, because an SRS subframe is configured separately, and all uplink symbols in the SRS subframe can be used to carry an SRS, a resource used to carry an SRS can be configured flexibly according to a quantity of terminals in a current system and requirements for channel measurement and estimation, so that implementation is more flexible.

In addition, when an SRS is multiplexed with a channel such as a PUSCH or a physical uplink control channel (Physical Uplink Control CHannel, PUCCH), for example, an SRS is multiplexed with a PUSCH channel, as shown in FIG. 4, to prevent a conflict between an SRS and these channels, a complex collision mechanism is generally introduced. For example, an SRS is dropped or some channels are dropped/punctured. Consequently, transmission performance of a channel deteriorates. If a PUCCH of a shortened (shortened) format or the like is used, a complex determining mechanism further needs to be introduced.

Optionally, by means of the solutions provided in the embodiments of the present invention, because relatively sufficient resources used to carry an SRS are provided, an SRS may not be multiplexed with a channel such as a PUSCH or a PUCCH. Therefore, use of a complex collision mechanism is avoided. Some channels may be not punctured or dropped, or an SRS may be not dropped, thereby ensuring transmission performance of a channel.

To sum up, a dedicated SRS subframe is provided in the embodiments of the present invention, and an SRS is transmitted in the dedicated SRS subframe, so that coverage of an SRS is improved, and a conflict with another channel is prevented, thereby reducing implementation complexity. In addition, because more transmission resources are provided, a capability of supporting multiple antennas can also be improved.

For ease of understanding, descriptions of some concepts related to the present invention are provided below as examples for reference.

First, concepts related to a wireless communications network are described.

1. The 3rd Generation Partnership Project (English: 3rd generation partnership project, 3GPP for short) is a project aiming to developing a wireless communications network. Generally, an organization related to the 3GPP is referred to as a 3GPP organization.

2. Wireless communications network

A wireless communications network is a network providing a wireless communications function. A wireless communications network may use different communications technologies, for example, Code Division Multiple Access (English: code division multiple access, CDMA for short), Wideband Code Division Multiple Access (English: wideband code division multiple access, WCDMA for short), Time Division Multiple Access (English: time division multiple access, TDMA for short), Frequency Division Multiple Access (English: frequency division multiple access, FDMA for short), Orthogonal Frequency Division Multiple Access (English: orthogonal frequency-division multiple access, OFDMA for short), single carrier frequency division multiple access (English: single Carrier FDMA, SC-FDMA for short), and carrier sense multiple access with collision avoidance (English: Carrier Sense Multiple Access with Collision Avoidance). According to factors, such as a capacity, a rate, and a delay, of different networks, a network may be classified into a 2G (English: generation) network, a 3G network or a 4G network. A typical 2G network includes a Global System for Mobile Communications (English: global system for mobile communications/general packet radio service, GSM for short) network or a general packet radio service (English: general packet radio service, GPRS for short) network. A typical 3G network includes a Universal Mobile Telecommunications System (English: universal mobile telecommunications system, UMTS for short) network. A typical 4G network includes a Long Term Evolution (English: long term evolution, LTE for short) network. The UMTS network may also be referred to as a universal terrestrial radio access network (English: universal terrestrial radio access network, UTRAN for short) sometimes. The LTE network may also be referred to as an evolved universal terrestrial radio access network (English: evolved universal terrestrial radio access network, E-UTRAN for short) sometimes. According to different resource allocation manners, a wireless communications network may be classified into a cellular communications network or a wireless local area network (English: wireless local area networks, WLAN for short). A cellular communications network is based on scheduling, and a WLAN is based on contention. The foregoing 2G, 3G, and 4G networks are all cellular communications networks. Persons skilled in the art should know that, with development of technologies, technical solutions provided in the embodiments of the present invention are also applicable to another wireless communications network such as a 4.5G or 5G network, or another non-cellular communications network. For brevity, in the embodiments of the present invention, a wireless communications network may be referred to as a network for short sometimes.

A cellular communications network is a wireless communications network and uses a cellular radio networking manner, in which a terminal device is connected to a network device by using a radio path, thereby implementing intercommunication between users in an activity. A main feature of a cellular communications network is support for mobility of a terminal and support for a handover function and a cross-local-network automatic roaming function of the terminal.

3. Terminal

A terminal may also be referred to as user equipment (English: user equipment, UE for short), and is a terminal device. The terminal may be a mobile terminal device or may be an immobile terminal device. The device is mainly configured to receive or send service data. User equipment may be distributed in a network. In different networks, user equipment has different names, for example, a terminal, a mobile station, a subscriber unit, a station, a cellular phone, a personal digital assistant, a wireless modem, a wireless communications device, a handheld device, a laptop computer, a cordless phone, and a wireless local loop station. The user equipment may communicate with one or more core networks by using a radio access network (radio access network, RAN for short) (an access part of a wireless communications network), for example, exchange voice and/or data with the radio access network.

### 4. Base station

A base station (English: base station, BS for short) device may also be referred to as a base station, and is an apparatus deployed in a radio access network to provide a wireless communications function. For example, a device providing a base station function in a 2G network includes a base transceiver station (English: base transceiver station, BTS for short) and a base station controller (English: base station controller, BSC for short). A device providing a base station function in a 3G network includes a NodeB (English abbreviation: NodeB) and a radio network controller (English: radio network controller, RNC for short). A device providing a base station function in a 4G network includes an evolved NodeB (English: evolved NodeB, eNB for short). A device providing a base station function in a WLAN is an access point (English: Access Point, AP for short). A device providing a function of a base station may also be a node in a future network such as a 4.5G or 5G network.

### 5. Cell

An area covered by a radio signal in mobile communications is referred to as a cell, and generally, a cell refers to an area that can be covered by a signal of one base station. Each cell has a cell identifier cell ID. One cell may also include multiple virtual cells. The virtual cells may be divided according to different horizontal or vertical spaces of the cell or divided in another manner. Each virtual cell has an independent cell identifier or a same cell identifier.

### 6. Resource

A resource may include at least one or more of a time resource, a frequency resource, a code resource, or a space resource.

A time resource is a time-based resource occupied by a signal. For example, a signal occupies two OFDM symbols or one subframe or three radio frames in time. A time resource may include an absolute time resource and a relative time resource, for example, at least one or more of a radio frame number, a relative location of a subframe in a radio frame, or a relative location of a symbol in a subframe. Generally, if a time resource is described to be fixed or variable, the description is with respective to a relative time resource. Generally, if time resources are described to be the same, it may be that absolute time resources are the same or that relative time resources are the same.

A frequency resource is a frequency-based resource occupied by a signal. For example, a signal occupies 10 MHz in frequency. In an OFDM system, a quantity of subcarriers is generally used to describe an occupied frequency resource.

A time-frequency resource is a time-and-frequency-based resource occupied by a signal. For example, a signal occupies two OFDM symbols in time and occupies 10 MHz in frequency.

A code resource is a code-based resource occupied by a signal. For example, a spreading code in WCDMA or a sequence resource such as a sequence used by a synchronization signal is also referred to as a code resource.

A sequence is a type of code resource.

A unit time-frequency resource is a time resource and a frequency resource in a minimum unit, and refers to a resource element (English: resource element) including one subcarrier and one OFDM symbol in an OFDM system.

### 7. Frame structure, radio frame, subframe, symbol, and timeslot

A frame structure is a structure presented when a time resource (a time domain) for transmitting a signal is divided. In wireless communications, time units in a generally used frame structure include a radio frame, a subframe, and a timeslot in descending order of magnitude. As shown in FIG. 1B, a radio frame is defined as a frame structure of a time length of $T_f$, one radio frame includes $n_{subf}$ subframes, and a length of each subframe is $T_f/n_{subf}$, or lengths of the subframes are different. One subframe includes $n_{slot}$ timeslots, and a number of each timeslot is $n_s \in \{0,1,...,n_{slot}-1\}$ or $n_s \in \{0,1,...,n_{subf} \times n_{slot}-1\}$. One timeslot may include $l_{\max}^{slot}$ symbols. One subframe includes $l_{\max}^{subframe}$ symbols. Specifically, a time length corresponding to each time unit may be specified according to a specific protocol requirement. A quantitative relationship between the time units is determined according to the time length corresponding to each time unit.

For example, a length of one radio frame in an existing LTE system is 10 ms. One radio frame includes 10 subframes, and a length of each subframe is 1 ms. One subframe includes two timeslots, and the timeslots are numbered from 0 to 19.

A frame structure in LTE is used as an example. A length of one radio frame (radio frame) is 10 ms. One radio frame includes 10 subframes (subframe), a length of each subframe is 1 ms, and the subframes are numbered from 0 to 9. Each subframe further includes two timeslots, and each timeslot (slot) is of 0.5 ms. One timeslot includes six or seven symbols. One subframe includes 12 or 14 symbols.

A symbol (symbol) is a minimum unit of a signal. Using an LTE network as an example, each OFDM subcarrier corresponds to one OFDM symbol.

A frame number is a number of each radio frame. Using an LTE network as an example, frames in LTE are numbered from 0 to 1023, and then start to be numbered from 0 again.

8. Frequency selective scheduling

Frequency selective scheduling (Frequency selective scheduling) refers to frequency domain scheduling performed according to a frequency response of a channel, for example, transmission performed by using a subcarrier (group) of relatively high channel quality.

9. Resource block (resource block, RB)

A resource block is used to describe mapping from a particular physical channel to a resource element. One physical resource block (physical resource block, PRB) is defined as a resource occupying $N_{\text{symb}}^{\text{DL}}$ consecutive OFDM symbols in a time domain, and occupying $N_{\text{sc}}^{\text{RB}}$ consecutive subcarriers in a frequency domain.

A PRB in an existing LTE system is defined as one slot in the time domain and 12 subcarriers in the frequency domain.

In the embodiments of the present invention, a PRB may be defined as a resource occupying $N_l$ consecutive symbols in the time domain and occupying $N_k$ consecutive subcarriers in the frequency domain. A value of $N_l$ may be $N_l \in \{1,...,n_{slot}\}$, and a value of $N_k$ is a positive integer.

Principles related to an SRS are described next.

A sounding reference signal (sounding reference signal, SRS) is a signal used to perform uplink channel sounding. A base station may perform uplink channel estimation according to an SRS sent by UE, and further perform frequency selective scheduling on uplink data. The base station may perform frequency selective scheduling on downlink data according to reciprocity between an uplink channel and a downlink channel. In addition, the base station may further determine, according to an SRS, a property of a terminal, including: a distance from the terminal, a spatial location of the terminal, and the like.

1. Comb (comb)

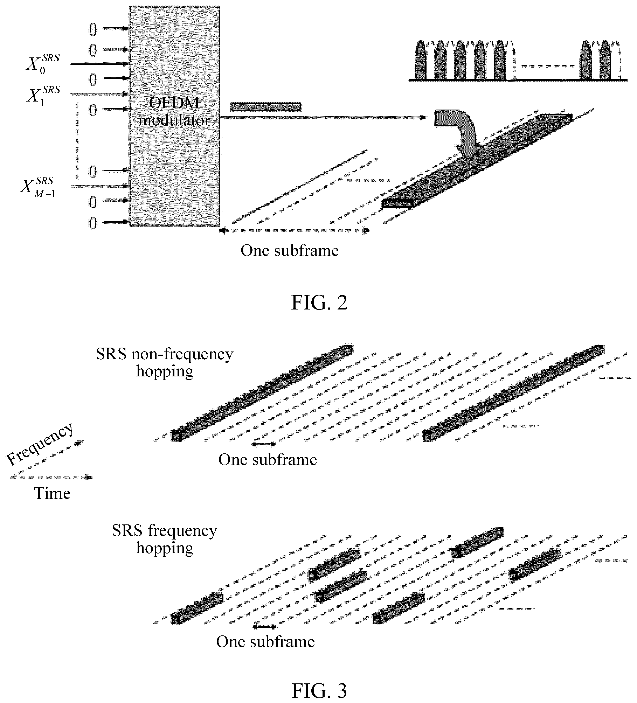

SRS transmission may use a comb structure. A terminal sends SRSs on subcarriers that have an interval of at least one subcarrier from each other on one symbol. The comb structure is named due to a comb-like shape. For example, as shown in FIG. 2, in a current LTE system, SRSs are sent on subcarriers that have an interval of one subcarrier from each other on one symbol.

2. Frequency domain resource occupied by an SRS

Currently, for aperiodic SRSs, there is no frequency hopping (hopping), but for periodic SRSs, frequency hopping may be used. In this case, hopping exists between subframes, that is, SRSs in different subframes occupy different frequency domain resources, as shown in FIG. 3.

Currently, in an LTE system, a cell-level SRS bandwidth $C_{\text{SRS}} \in \{0,1,2,3,4,5,6,7\}$ and UE-level SRS bandwidth configuration $B_{\text{SRS}}$ are configured by using higher layer signaling such as Radio Resource Control (Radio Resource Control, RRC) signaling. One cell-level SRS bandwidth includes four types of UE-level SRS bandwidths $B_{\text{SRS}} \in \{0,1,2,3\}$, and a subcarrier comb parameter $\overline{k}_{\text{TC}} \in \{0,1\}$ (because there is an interval of only one subcarrier during current SRS transmission) and a frequency domain location parameter $n_{\text{RRC}}$ are configured for SRS transmission. A terminal may determine a specific frequency domain resource for SRS transmission by using these parameters.

For different uplink bandwidths, SRS bandwidth configurations are as follows. For details, refer to the following descriptions in the 3rd Generation Partnership Project (3rd Generation Partnership Project, 3GPP) technical specification (Technical Specification, TS) 36.211. Herein, an example in which an uplink bandwidth is not less than six RBs and not greater than 40 RBs is used.

Table 5.5.3.2-1: $m_{\text{SRS},b}$ and $N_b$, b = 0,1,2,3, and value of uplink bandwidth: $6 \leq N_{\text{RB}}^{\text{UL}} \leq 40$

| SRS bandwidth configuration (SRS bandwidth configuration) $C_{\text{SRS}}$ | SRS-Bandwidth (SRS-Bandwidt h) $B_{\text{SRS}} = 0$ | | SRS-Bandwidth (SRS-Bandwidt h) $B_{\text{SRS}} = 1$ | | SRS-Bandwidth (SRS-Bandwidt h) $B_{\text{SRS}} = 2$ | | SRS-Bandwidth (SRS-Bandwidt h) $B_{\text{SRS}} = 3$ | |
|---|---|---|---|---|---|---|---|---|
| | $m_{\text{SRS},0}$ | $N_0$ | $m_{\text{SRS},1}$ | $N_1$ | $m_{\text{SRS},2}$ | $N_2$ | $m_{\text{SRS},3}$ | $N_3$ |
| 0 | 36 | 1 | 12 | 3 | 4 | 3 | 4 | 1 |
| 1 | 32 | 1 | 16 | 2 | 8 | 2 | 4 | 2 |
| 2 | 24 | 1 | 4 | 6 | 4 | 1 | 4 | 1 |
| 3 | 20 | 1 | 4 | 5 | 4 | 1 | 4 | 1 |
| 4 | 16 | 1 | 4 | 4 | 4 | 1 | 4 | 1 |
| 5 | 12 | 1 | 4 | 3 | 4 | 1 | 4 | 1 |
| 6 | 8 | 1 | 4 | 2 | 4 | 1 | 4 | 1 |
| 7 | 4 | 1 | 4 | 1 | 4 | 1 | 4 | 1 |

A frequency domain start location $k_0^{(p)}$ is calculated as follows:

$$k_0^{(p)} = \overline{k}_0^{(p)} + \sum_{b=0}^{B_{\text{SRS}}} 2 M_{\text{sc},b}^{\text{RS}} n_b ,$$

where $M_{\text{sc},b}^{\text{RS}}$ is a length of an SRS sequence and is defined as follows: $M_{\text{sc},b}^{\text{RS}} = m_{\text{SRS},b} N_{\text{sc}}^{\text{RB}} / 2$ , where $m_{\text{SRS},b}$

is determined by an SRS bandwidth configuration in each uplink bandwidth $N_{\text{RB}}^{\text{UL}}$; $N_{\text{sc}}^{\text{RB}}$ is a quantity of subcarriers in one RB, and currently is 12; $n_b$ indicates a number of a band occupied by an SRS in a bandwidth of each layer, and in $n_b$, a value range of b is from 0 to $B_{\text{SRS}}$, where 0 indicates a zeroth layer, 1 indicates a first layer, 2 indicates a second layer, and 3 indicates a third layer; $B_{\text{SRS}}$ indicates a division level of an entire bandwidth; and p is an antenna port number. $\overline{k}_0^{(p)}$ in an uplink subframe is defined as follows:

$$\overline{k}_0^{(p)} = \left( \lfloor N_{\text{RB}}^{\text{UL}} / 2 \rfloor - m_{\text{SRS},0} / 2 \right) N_{\text{SC}}^{\text{RB}} + k_{\text{TC}}^{(p)} .$$

$\overline{k}_0^{(p)}$ in an UpPTS is defined as follows:

$$\overline{k}_0^{(p)} = \begin{cases} (N_{\text{RB}}^{\text{UL}} - m_{\text{SRS},0}^{\max}) N_{\text{sc}}^{\text{RB}} + k_{\text{TC}}^{(p)} & \text{If } \left( (n_{\text{f}} \bmod 2) \cdot (2 - N_{\text{SP}}) + n_{\text{hf}} \right) \bmod 2 = 0 \\ k_{\text{TC}}^{(p)} & \text{Others} \end{cases}$$

For the UpPTS, if it indicates, by using a higher layer configuration parameter srsMaxUpPts, that reconfiguration

$$m_{\text{SRS},0}^{\max} = \max_{c \in C_{SRS}} \left\{ m_{\text{SRS},0}^c \right\} \leq \left( N_{\text{RB}}^{\text{UL}} - 6 N_{\text{RA}} \right) .$$

is available, $m_{\text{SRS},0}$ is reconfigured to ; otherwise, reconfiguration

$$m_{\text{SRS},0}^{\max} = m_{\text{SRS},0}$$

is unavailable, and $\qquad$ , where $c$ is an SRS bandwidth configuration, $C_{\text{SRS}}$ is a set of SRS bandwidth configurations in each uplink bandwidth $N_{\text{RB}}^{\text{UL}}$, where $C_{\text{SRS}} \in \{0,1,2,3,4,5,6,7\}$, $N_{\text{RA}}$ is a quantity of PRACHs (physical random access channel, physical random access channel) with a format 4 in the UpPTS, and each PRACH occupies

sixth PRBs. $k_{\text{TC}}^{(p)} \in \{0,1\}$ is calculated as follows:

$$k_{\text{TC}}^{(p)} = \begin{cases} 1\text{-}\overline{k}_{\text{TC}} & \text{If } n_{\text{SRS}}^{\text{cs}} \in \{4,5,6,7\} \text{ and } \tilde{p} \in \{1,3\} \text{ and } N_{\text{ap}} = 4 \\ \overline{k}_{\text{TC}} & \text{Others} \end{cases}$$

A correspondence between $\tilde{p}$ and an antenna $p$ is as follows:

| Physical channel or signal | Sequence number (Index) $\tilde{p}$ | Antenna port number p: a function of a quantity of antenna ports configured for a respective physical channel or signal (Antenna port number p as a function of the number of antenna ports configured for the respective physical channel/signal) | | |
|---|---|---|---|---|
| | | **1** | **2** | **4** |
| SRS | 0 | 10 | 20 | 40 |
| | 1 | - | 21 | 41 |
| | 2 | - | - | 42 |
| | 3 | - | - | 43 |

$\overline{k}_{\text{TC}} \in \{0,1\}$ is determined by a parameter: transmissionComb or transmissionComb-ap, provided by a higher layer, where transmissionComb and transmissionComb-ap respectively correspond to periodic SRS transmission and aperiodic SRS transmission, and $n_b$ is a frequency domain location parameter and is calculated as follows. For an UpPTS in a first half-frame of a radio frame (using that one radio frame includes 10 subframes as an example, the first half-frame refers to subframes numbered from 0 to 4 in the radio frame), $n_{\text{hf}}$ is equal to 0; and for an UpPTS in a second half-frame in the radio frame (using that one radio frame includes 10 subframes as an example, the second half-frame refers to subframes numbered from 5 to 9 in the radio frame), $n_{\text{hf}}$ is equal to 1.

An SRS frequency domain hopping indication parameter is $b_{\text{hop}} \in \{0,1,2,3\}$, and is determined by a higher layer parameter srs-HoppingBandwidth. When $b_{\text{hop}} \geq B_{\text{SRS}}$, SRS frequency domain hopping is unavailable, and $n_b$ is constant (unless reconfigured) as $n_b = \lfloor 4n_{\text{RRC}}/m_{\text{SRS},b} \rfloor \bmod N_b$. For periodic SRS transmission, a parameter $n_{\text{RRC}}$ is determined by a higher layer parameter freqDomainPosition, and for aperiodic SRS transmission, the parameter $n_{\text{RRC}}$ is determined by a higher layer parameter freqDomainPosition-ap, where freqDomainPosition and freqDomainPosition-ap respectively correspond to periodic SRS transmission and aperiodic SRS transmission. When $b_{\text{hop}} < B_{\text{SRS}}$, SRS frequency domain hopping is unavailable, and $n_b$ is defined as follows:

$$n_b = \begin{cases} \lfloor 4n_{\text{RRC}}/m_{\text{SRS},b} \rfloor \bmod N_b & b \leq b_{\text{hop}} \\ \{F_b(n_{\text{SRS}}) + \lfloor 4n_{\text{RRC}}/m_{\text{SRS},b} \rfloor\} \bmod N_b & \text{Others} \end{cases},$$

where $N_b$ is determined by an SRS bandwidth configuration in each uplink bandwidth $N_{\text{RB}}^{\text{UL}}$; and

$$F_b(n_{\text{SRS}}) = \begin{cases} (N_b/2)\left\lfloor \dfrac{n_{\text{SRS}} \bmod \Pi_{b'=b_{\text{hop}}}^{b} N_{b'}}{\Pi_{b'=b_{\text{hop}}}^{b-1} N_{b'}} \right\rfloor + \left\lfloor \dfrac{n_{\text{SRS}} \bmod \Pi_{b'=b_{\text{hop}}}^{b} N_{b'}}{2\Pi_{b'=b_{\text{hop}}}^{b-1} N_{b'}} \right\rfloor & N_b \text{ is an even number} \\ \lfloor N_b/2 \rfloor \left\lfloor n_{\text{SRS}} / \Pi_{b'=b_{\text{hop}}}^{b-1} N_{b'} \right\rfloor & N_b \text{ is an odd number} \end{cases}$$

,

where $N_{b_{\text{hop}}} = 1$, and

$$n_{\text{SRS}} = \begin{cases} 2N_{\text{SP}} n_{\text{f}} + 2(N_{\text{SP}} - 1)\left\lfloor \dfrac{n_{\text{s}}}{10} \right\rfloor + \left\lfloor \dfrac{T_{\text{offset}}}{T_{\text{offset\_max}}} \right\rfloor, \\ \left\lfloor (n_{\text{f}} \times 10 + \lfloor n_{\text{s}}/2 \rfloor) / T_{\text{SRS}} \right\rfloor, \end{cases}$$

,

For a frame structure type 2, an SRS period is 2 ms Others

where $N_{\text{SP}}$ is a quantity of uplink and downlink switching points in a radio frame, $n_{\text{f}}$ is an identifier of a radio frame, $n_{\text{s}}$ is an identifier of a timeslot in a radio frame, $T_{\text{SRS}}$ is an SRS transmission period, $T_{\text{offset}}$ is an SRS transmission offset (offset), and $T_{\text{offset\_max}}$ is a maximum value of the SRS subframe offset in a fixed configuration. During an SRS is multiplexed with another channel, a relatively complex collision mechanism is required, and an SRS may be dropped or a physical uplink shared channel (Physical Uplink Shared Channel, PUSCH) may be punctured or a PUCCH of a shortened (shortened) mode may be used, leading to deterioration in transmission performance of the another channel. FIG. 4 shows a resource occupation status when an SRS is multiplexed with a PUSCH. When an SRS is not multiplexed with a PUSCH, generally, the PUSCH and a PUCCH occupy all symbols in one band. However, when an SRS is multiplexed with a PUSCH in a manner in FIG. 4, the PUSCH is not transmitted on a last symbol, and rate matching is performed, while a PUCCH is transmitted in a shortened mode, that is, the PUCCH is not transmitted on a last symbol. Consequently, performance of the PUSCH and the PUCCH is affected, and a terminal needs to determine, by using a particular collision mechanism, whether to transmit an SRS.

3. SRS transmission by using multiple antennas

Currently, in an LTE system, a terminal supports transmission using at most four antennas, and SRSs sent by one terminal on different antennas use different SRS sequences:

for an antenna $\tilde{p}$, an SRS sequence is $r_{\text{SRS}}^{(\tilde{p})}(n) = r_{u,v}^{(\alpha_{\tilde{p}})}(n) = e^{j\alpha_{\tilde{p}} n} \overline{r}_{u,v}(n)$, where $0 \leq n < M_{\text{sc}}^{\text{RS}}$,

where $\overline{r}_{u,v}(n)$ is a basic sequence determined by $u$ and $v$, $u$ is a number of a sequence group, $v$ is a number of a sequence, and $M_{\text{sc}}^{\text{RS}}$ is a length of an SRS sequence,

where $u = (f_{\text{gh}}(n_{\text{s}}) + f_{\text{ss}}) \bmod 30$, $f_{\text{ss}}$ refers to a sequence-shift pattern sequence-shift pattern, and has 30 options, and whether to perform group hopping (group hopping) is determined by a higher layer parameter: group-hopping-enabled (Group-hopping-enabled),

Where

$$f_{\text{gh}}(n_{\text{s}}) = \begin{cases} 0 & \text{Not perform group hopping} \\ \left( \sum_{i=0}^{7} c(8n_{\text{s}} + i) \cdot 2^i \right) \bmod 30 & \text{Perform group hopping} \end{cases}$$

,

where $c$ is a pseudo-random sequence, $f_{\text{gh}}(n_{\text{s}})$ is a group-hopping pattern group-hopping pattern, and has 17 options,

$$f_{ss}^{SRS} = n_{ID}^{RS} \bmod 30$$ , and $$n_{ID}^{RS} = N_{ID}^{cell}$$ , where $n_s$ is a number of a timeslot in a radio frame,

where

$$c(n) = \left(x_1(n+N_C) + x_2(n+N_C)\right) \bmod 2$$
$$x_1(n+31) = \left(x_1(n+3) + x_1(n)\right) \bmod 2$$
$$x_2(n+31) = \left(x_2(n+3) + x_2(n+2) + x_2(n+1) + x_2(n)\right) \bmod 2 ,$$

where $x_1$ and $x_2$ are M sequences m-sequences, and

$$x_1(0) = 1, x_1(n) = 0, n = 1, 2, ..., 30 , \quad c_{init} = \sum_{i=0}^{30} x_2(i) \cdot 2^i , \quad c_{init} = \left\lfloor \frac{n_{ID}^{RS}}{30} \right\rfloor ,$$

$c_{init}$ is an initial value of a sequence, and $x_2(0)$ to $x_2(30)$ may be calculated according to $c_{init}$.

A cyclic shift $\alpha_{\tilde{p}}$ of the SRS sequence is calculated according to the following formula:

$$\alpha_{\tilde{p}} = 2\pi \frac{n_{SRS}^{cs,\tilde{p}}}{8}$$

$$n_{SRS}^{cs,\tilde{p}} = \left(n_{SRS}^{cs} + \frac{8\tilde{p}}{N_{ap}}\right) \bmod 8$$
$$\tilde{p} \in \left\{0, 1, ..., N_{ap} - 1\right\} ,$$

$$n_{SRS}^{cs} = \left\{0, 1, 2, 3, 4, 5, 6, 7\right\}$$

where mod indicates a modulo operation, is configured by a higher layer, and $N_{ap} \in \{1,2,4\}$ indicates a quantity of antennas used for SRS transmission, and a maximum value is 4.

A wireless communications system, a terminal, a base station, and an SRS configuration method and an SRS transmission method that are provided in the embodiments of the present invention are separately described below.

A wireless communications system provided in an embodiment of the present invention is first described.

FIG. 5 is a schematic structural diagram of a wireless communications system according to an embodiment of the present invention. As shown in FIG. 5, the wireless communications system includes: a base station 501 and a terminal 502.

The base station 501 is configured to send configuration information of an SRS subframe to the terminal 502.

The terminal 502 is configured to: receive the configuration information of the SRS sub frame sent by the base station 501; determine a configuration of the SRS sub frame according to the received configuration information; and send an SRS in the SRS subframe according to the determined configuration of the SRS subframe.

The SRS subframe is an uplink subframe, or is a subframe in which a quantity of uplink symbols is not less than a quantity of downlink symbols; and all uplink symbols in the SRS subframe can be used to carry an SRS.

The wireless communications system provided in this embodiment of the present invention may be a system in the foregoing wireless communications networks in various standards, for example, may be a time division duplex (Time Division Duplexing, TDD) system such as a TDD LTE system, or may be a frequency division duplex (Frequency Division Duplexing, FDD) system such as an FDD LTE system.

The wireless communications system provided in this embodiment of the present invention may be a single-carrier system or may be a multi-carrier system.

The wireless communications system provided in this embodiment of the present invention may be a high-frequency system whose working frequency is higher than 6 GHz or may be a system whose working frequency is lower than 6 GHz.

In the wireless communications system provided in this embodiment of the present invention, the terminal 502 may be any one of the foregoing terminals, for example, may be user equipment such as user equipment (User Equipment, UE) in an LTE system, or may be a device that is in another system and that performs wireless communication with a base station, or may be a relay device that communicates with a base station, for example, a relay.

In the wireless communications system provided in this embodiment of the present invention, the base station 501 may be any one of the foregoing base stations, and may be a device that performs wireless communication with a terminal, for example, an evolved NodeB (evolved NodeB, eNB) in an LTE system, or may further include a base station controller for controlling the base station. The base station controller controls communication, channel and radio resource allocation, and the like between the base station 501 and the terminal 502, or the base station may be a relay device that communicates with a terminal, for example, a relay.

As described above, in this embodiment of the present invention, the SRS subframe has multiple configurations: Configuration 1: the SRS subframe is an uplink subframe.

All uplink symbols in the SRS subframe can be used to carry an SRS.

Optionally, some uplink symbols in the SRS subframe may be further used to carry a PUCCH.

Configuration 2: the SRS subframe is a subframe in which a quantity of uplink symbols is not less than a quantity of downlink symbols.

Similarly, all uplink symbols in the SRS subframe can be used to carry an SRS. Optionally, some uplink symbols in the SRS subframe may be further used to carry a PUCCH. In this case, an SRS and a PUCCH may occupy a same symbol or different symbols. When an SRS and a PUCCH occupy a same symbol, the SRS and the PUCCH separately occupy a different subcarrier.

For example, all symbols in one band in the SRS subframe are used to transmit a PUCCH; or some symbols and some bands in the SRS subframe are used to transmit a PUCCH.

The foregoing two configurations are only examples as long as more resources can be provided to carry an SRS to meet a requirement of wireless communications for an SRS resource.

Optionally, a quantity of uplink symbols in the SRS subframe that are used to carry SRSs may be determined according to at least one of the following factors:

a quantity of terminals at a current moment;
a quantity of antennas of a terminal;
a location of a cell in which a terminal is located;
a transmit power of a terminal;
requirements for uplink estimation and uplink channel quality measurement;
a data transmission delay requirement; or
a working frequency of the wireless communications system.

For example, a larger quantity of terminals indicates that more uplink symbols are used to carry SRSs. For another example, if each terminal transmits SRSs by using multiple antennas, more uplink symbols may be required to carry SRSs. For another example, if a terminal is located at an edge of a cell, a bandwidth for sending SRSs is relatively narrow, and a quantity of symbols is relatively large. For another example, a higher transmit power of a terminal indicates that a bandwidth for sending SRSs may be increased and a quantity of occupied symbols may be reduced. For another example, when channel quality between a base station and a terminal deteriorates, the terminal may need to send more SRSs to meet requirements for channel quality measurement and channel estimation. For another example, when a data transmission delay is required to be lower, more uplink symbols may be neended to carry SRSs, so that a base station schedules downlink data faster according to a result of uplink channel estimation. For another example, a higher working frequency of the wireless communications system indicates that more uplink symbols may be required to carry SRSs.

Therefore, in this embodiment of the present invention, an SRS may be configured flexibly according to a system requirement. This is more flexible than an implementation mechanism in a current LTE system.

The configuration of the SRS sub frame may include the following six types:

1. a cell-level time domain configuration;
2. a terminal-level time domain configuration;
3. a symbol configuration;
4. a frequency domain configuration;
5. a comb configuration; and
6. a transmission sequence configuration.

As described above, the base station 501 sends the configuration information of the SRS subframe to the terminal 502, or the configuration information is predefined. The terminal 502 sends an SRS in the SRS subframe according to the received configuration information or the predefined configuration information, and the base station 501 also receives, according to the configuration information, an SRS sent by the terminal 502.

That is, the terminal 502 determines, according to the received configuration information or the predefined configuration information, how to send an SRS. Similarly, the base station 501 determines, according to the sent configuration information and/or the predefined configuration information, how to receive an SRS of the terminal. That is, if a manner in which the terminal sends an SRS is determined, the SRS of the terminal can be correspondingly received. It may be understood that, the base station can configure how multiple terminals send SRSs and receive SRSs from the multiple terminals.

Herein, the sent configuration information may be information related to at least one of the foregoing six configurations.

Alternatively, optionally, the configuration of the SRS subframe may also be predefined. The terminal 502 sends an SRS according to the predefined configuration, and the base station 501 also receives, according to the predefined configuration, the SRS sent by the terminal 502. Herein, the predefined configuration information may be information related to at least one of the foregoing six configurations.

The foregoing six configurations are separately described below..

[1. Cell-level time domain configuration]

The cell-level time domain configuration includes:

    1. a period of an SRS subframe in a current cell in which the terminal 502 is located; and
    2. an SRS subframe offset of the SRS subframe in the current cell.

A location of the SRS subframe in a radio frame can be determined by using the foregoing two configurations.

Optionally, a location of the SRS subframe in a radio frame may be predefined.

Alternatively, optionally, the base station 501 sends the following configuration information to the terminal 502:

information used to indicate a value of $T_{SRS}^{cell}$, where $T_{SRS}^{cell}$ is the period of the SRS subframe in the current cell; and

information used to indicate a value of $T_{offset}^{cell}$, where $T_{offset}^{cell}$ is the SRS subframe offset in the current cell.

Optionally, a value range of $T_{offset}^{cell}$ is: 0 to $T_{SRS}^{cell} - 1$, and $T_{SRS}^{cell}$ and $T_{offset}^{cell}$ use a subframe as a unit.

The terminal 502 may determine a location of an SRS subframe in a radio frame according to a frame number of the radio frame, $T_{SRS}^{cell}$, and $T_{offset}^{cell}$.

For example, the terminal 502 determines a subframe number of the SRS subframe in the radio frame according to one of the following formulas:

$$(n_{subf} \cdot n_f + k_{SRS}^{cell} - T_{offset}^{cell}) \bmod T_{SRS}^{cell} = 0\ ;$$

$$(n_{subf} \cdot n_f + k_{SRS}^{cell} + T_{offset}^{cell}) \bmod T_{SRS}^{cell} = 0\ ;$$

$$(k_{SRS}^{cell} - T_{offset}^{cell}) \bmod T_{SRS}^{cell} = 0\ ;$$

or

$$(k_{SRS}^{cell} + T_{offset}^{cell}) \bmod T_{SRS}^{cell} = 0\ ,$$

where $n_{subf}$ is a quantity of subframes included in one radio frame, $n_f$ is a frame number of the radio frame, $T^{cell}_{offset}$ is an SRS subframe offset, and $k^{cell}_{SRS}$ is a subframe number of the SRS subframe in the radio frame. $T^{cell}_{SRS}$ and $T^{cell}_{offset}$ may be configured by using higher layer signaling, and the following two manners may be used during notification:

Manner 1: joint notification

For example, $T^{cell}_{SRS}$ and $T^{cell}_{offset}$ may be indicated at the same time by using a configuration index, as shown in the following table:

| Configuration index (index) | Period $T^{cell}_{SRS}$ of the SRS subframe SRS (subframe length) | SRS subframe offset $T^{cell}_{offset}$ |
|---|---|---|
| 0000 | 5 | 0 |
| 0001 | 5 | 2 |
| 0010 | 10 | 0 |
| 0011 | 10 | 1 |
| 0100 | 10 | 2 |
| ... | ... | ... |

Manner 2: independent notification

For example, the period $T^{cell}_{SRS}$ is indicated by using two bits (bit):

00 indicates that the period has a length of five subframes;
01 indicates that the period is has a length of 10 subframes;
10 indicates that the period has a length of 15 subframes; or
11 indicates that the period has a length of 20 subframes.

Using that the period has a length of five subframes as an example, the SRS subframe offset $T^{cell}_{offset}$ is indicated by using two bits:

00 indicates that the offset is 0;
01 indicates that the offset is 1;
10 indicates that the offset is 2;
11 indicates that the offset is 3; or the like.

[2. Terminal-level time domain configuration]

Optionally, the terminal 502 further needs to configure an allocated SRS sub frame, for example, an interval of SRS subframes for sending SRSs, and a start location of an SRS subframe for sending an SRS, for example, sending is performed in each SRS sub frame or sending is performed at intervals of N SRS subframes. Because a quantity of SRS subframes is less than a quantity of subframes in a radio frame, such an indication method also reduces signaling overheads.

The terminal-level time domain configuration of the terminal 502 may include:

a period $T^{ue}_{SRS}$ of the SRS subframe of the terminal 502.

Optionally, $T^{ue}_{SRS}$ is an integer multiple of $T^{cell}_{offset}$, that is, $T^{ue}_{SRS} = t \cdot T^{cell}_{SRS}$, where $t$ is a positive integer.

The foregoing configuration may be predefined. Alternatively, optionally, the base station 501 may notify the terminal 502 of configuration information of the terminal-level time domain configuration of the terminal 502 by using higher layer signaling.

For $T^{ue}_{SRS}$, there may be two notification manners:

Manner 1: $T^{ue}_{SRS}$ is directly notified.

For example, when $T^{cell}_{SRS}$ is 5, a period of a UE-level SRS subframe may be {5, 10, 15, 20, ...}, and is indicated by using two or three bits.

If such a direct indication manner is used, a cell-level configuration may exist or may be omitted.

Manner 2: t is notified.

For example, 00 indicates that sending is performed in each SRS subframe;

> 01 indicates an interval of one SRS subframe;
> 10 indicates an interval of two SRS subframes; or
> 11 indicates an interval of three SRS subframes.

Optionally, the terminal 502 may determine, in the following manner, a start location of a subframe for sending an SRS.

Manner 1

After the terminal 502 receives the configuration information of the terminal-level time domain configuration in a subframe n, a first SRS subframe that can be occupied by an SRS sent by the terminal 502 is a start location of an SRS subframe for sending an SRS by the terminal 502; or

a start location of an SRS subframe for sending by the terminal 502 needs to have a fixed interval of d subframes from a subframe n, a first SRS subframe that is after d subframes and that can be occupied by an SRS sent by the terminal 502 is a start location of a subframe for sending an SRS by the terminal 502.

The foregoing rules may be predefined, for example, predefined by using a protocol.

The terminal-level time domain configuration of the terminal 502 may further include:

> an SRS subframe offset $T^{ue}_{offset}$ of the terminal 502, where
>
> a value range of $T^{ue}_{offset}$ may be: 0 to $T^{ue}_{SRS} - 1$.

Optionally, a location, of the SRS subframe that can be occupied by an SRS sent by the terminal 502, in a radio frame is determined according to a frame number of the radio frame, the period $T^{ue}_{SRS}$ of the SRS subframe of the terminal 502, and the SRS subframe offset $T^{ue}_{offset}$ of the terminal. $T^{ue}_{offset}$ indicates an SRS subframe which is in a radio frame and starting from which the terminal 502 transmits an SRS. For example, if one radio frame includes four cell-level SRS subframes, a start location of an SRS subframe for sending by the terminal 502 is indicated by using two bits. For example:

> 00 indicates that transmission starts from a first SRS subframe;
> 01 indicates that transmission starts from a second SRS subframe;
> 10 indicates that transmission starts from a third SRS subframe; or
> 11 indicates that transmission starts from a fourth SRS subframe.

Optionally, the base station 501 may also notify the period $T^{ue}_{SRS}$ of the SRS subframe of the terminal 502 and the SRS subframe offset $T^{ue}_{offset}$ of the terminal 502 in a joint manner.

For example, $T_{SRS}^{ue}$ and $T_{offset}^{ue}$ may be indicated at the same time by using a configuration index index, as shown in the following table:

| Configuration index (index) | Period $T_{offset}^{ue}$ of the SRS subframe of the terminal 502 (subframe length) | SRS subframe offset $T_{offset}^{ue}$ of the terminal 502 |
|---|---|---|
| 0000 | 5 | 0 |
| 0001 | 5 | 2 |
| 0010 | 10 | 0 |
| 0011 | 10 | 1 |
| 0100 | 10 | 2 |
| ... | ... | ... |

or

| Configuration index (index) | Period $T_{offset}^{ue}$ of the SRS subframe of the terminal (subframe length) (notification of a multiple t) | SRS subframe offset $T_{offset}^{ue}$ of the terminal |
|---|---|---|
| 0000 | 1 | 0 |
| 0001 | 1 | 2 |
| 0010 | 2 | 0 |
| 0011 | 2 | 1 |
| 0100 | 2 | 2 |
| ... | ... | ... |

[3. Symbol configuration]

In the SRS subframe, the base station 501 may configure symbols for transmission of SRSs from different terminals, and a symbol transmission mode of a terminal in the SRS subframe may include, but is not limited to, any one of the following manners:

the terminal may transmit SRSs by using all uplink symbols in the SRS subframe; or
the terminal may transmit SRSs by using some uplink symbols in the SRS subframe, for example, several neighboring uplink symbols, or several uplink symbols that have an interval.

The symbol transmission mode of the terminal in the SRS subframe may be predefined, or may be notified to the terminal by using higher layer signaling.
If the base station 501 notifies the terminal 502 by using higher layer signaling, the base station 501 needs to send, to the terminal 502, indication information used to indicate a symbol transmission mode of the terminal 502 in the SRS subframe, for example, one of the foregoing three symbol transmission modes is indicated by using two bits:

00 indicates that SRSs are transmitted on all uplink symbols in the SRS subframe;
01 indicates that SRSs are transmitted on multiple neighboring uplink symbols in the SRS subframe;
10 indicates that SRSs are transmitted on uplink symbols that have an interval of one symbol from each other in the SRS subframe; or
11 indicates that SRSs are transmitted on uplink symbols that have an interval of two symbols from each other in the SRS subframe.

If the symbol transmission mode of the terminal 502 in the SRS subframe is that:

the terminal 502 sends SRSs on multiple neighboring symbols in the SRS subframe or the terminal 502 sends SRSs on symbols that have an interval of a specified quantity of symbols from each other in the SRS subframe,
the symbol configuration of the terminal 502 may further include:
a start location of a symbol occupied by an SRS sent by the terminal 502. The start location may be predefined, or may be notified by the base station 501 to the terminal 502 by using higher layer signaling. The start location may be a subframe-level configuration or a timeslot-level configuration. Descriptions are separately provided below.

1. Subframe-level configuration (that is, locations of symbols are numbered using one subframe as a period)

The subframe-level configuration may include: a start location $l_{start} \in \{1, 2, 3, ..., l_{max}^{subframe}\}$ or $l_{start} \in \{0, 1, 2, 3, ..., l_{max}^{subframe} - 1\}$, of a symbol on which the terminal 5 02 sends an SRS and that is in the SRS subframe, in the SRS subframe, where $l_{max}^{subframe}$ indicates a total quantity of symbols in one subframe. For example, in the current LTE system, $l_{max}^{subframe}$ is 14 for a conventional CP, and $l_{max}^{subframe}$ is 12 for an extended CP.

Optionally, the subframe-level configuration may be predefined, or may be notified by the base station 501 to the terminal 502. For example, the base station 501 may indicate the start location by using two to four bits.

After determining the start location according to the predefined configuration information or the configuration information sent by the base station 501, the terminal 502 sends SRSs in the entire subframe according to one of the foregoing symbol transmission modes.

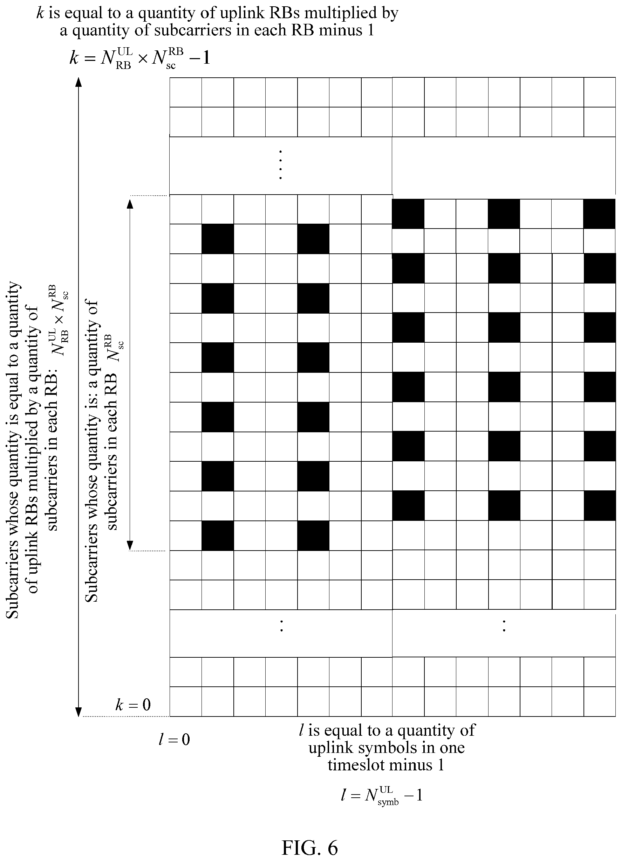

For example, if the start location is a second symbol, and the symbol transmission mode is that SRSs are transmitted by using uplink symbols that have an interval of two symbols from each other in the SRS subframe, a status in which the terminal 502 sends SRSs in the entire SRS subframe is shown in FIG. 6, where $l$ is a number of a symbol, and k is a number of a subcarrier.

Optionally, the subframe-level configuration may further include at least one of the following configurations:

a total quantity of symbols on which the terminal 502 sends SRSs and that are in the SRS subframe; or
an end location, of a symbol on which the terminal 502 sends an SRS and that is in the SRS subframe, in the SRS subframe.

Optionally, the subframe-level configuration may also be number (index) information of a symbol on which the terminal 502 sends an SRS and that is in the SRS subframe, and the number information may be direct information, for example, a binary code corresponding to a symbol 0, 2, or 4, or may be indirect information. The terminal 502 determines, according to the indirect information and a formula that is known in advance, a location of a symbol for sending an SRS.

Optionally, the foregoing two subframe-level configurations may be predefined, or the base station 501 notifies the terminal of configuration information used to indicate the two configurations.

2. Timeslot-level configuration (that is, locations of symbols are numbered using one timeslot as a period)

The timeslot-level configuration may include:

a timeslot occupied by an SRS that is sent by the terminal 502 in the SRS subframe; and
a start location, of a symbol on which the terminal 502 sends an SRS and that is in the SRS subframe, in each timeslot in the SRS subframe.

Similarly, the timeslot-level configuration may further include at least one of the following configurations:

a total quantity of symbols on which the terminal 502 sends SRSs and that are in one timeslot in the SRS subframe; or
an end location, of a symbol on which the terminal 502 sends an SRS and that is in the SRS subframe, in each timeslot in the SRS subframe.

Optionally, the subframe-level configuration may also be number (index) information of a symbol on which the terminal 502 sends an SRS and that is in a timeslot in the SRS subframe, that is, the number information uses one timeslot as a period, and the number information may be direct information, for example, a binary code corresponding to a symbol 0, 2, or 4, or may be indirect information. The terminal 502 determines, according to the indirect information and a formula that is known in advance, a location of a symbol for sending an SRS in a timeslot.

Similarly, the foregoing configuration may be predefined, or the base station 501 notifies the terminal 502 of configuration information of the configuration.

For example, a start location $l_{start} \in \{1, 2, 3, ..., l_{max}^{slot}\}$ or $l_{start} \in \{0, 1, 2, 3, ..., l_{max}^{slot} - 1\}$ may be indicated by using two bits, where $l_{max}^{slot}$ indicates a total quantity of symbols in one timeslot.

There are two options for the timeslot-level configuration.

Option 1

SRS transmission is performed on both a first timeslot and a second timeslot according to the start location and the symbol transmission mode. In this case, information: a timeslot occupied by an SRS that is sent by the terminal 502 in the SRS subframe may be omitted.

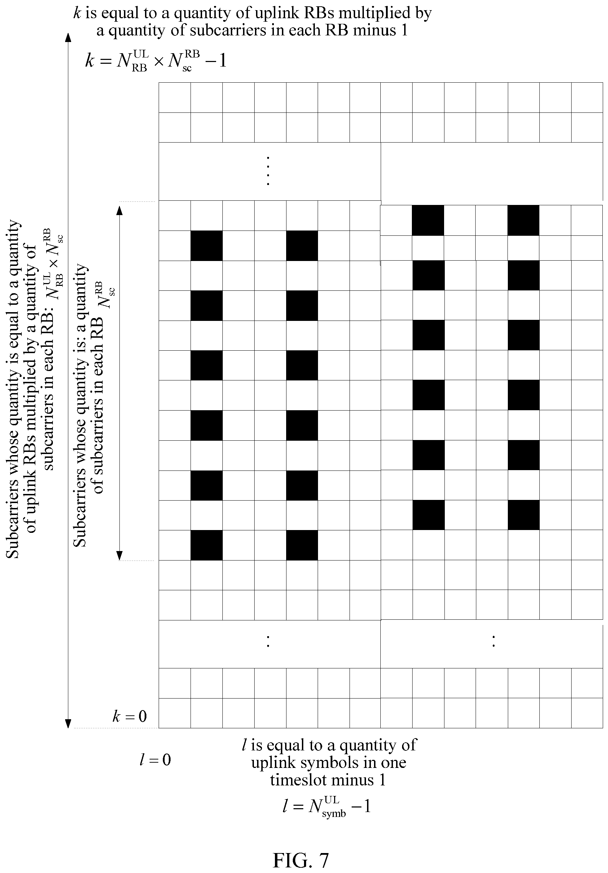

For example, if the timeslot-level configuration indicates that the start location is a second symbol, and the symbol transmission mode is that the terminal 502 transmits SRSs by using uplink symbols that have an interval of two symbols from each other in the SRS subframe, a transmission status of SRSs in the entire subframe is shown in FIG. 7.

Option 2

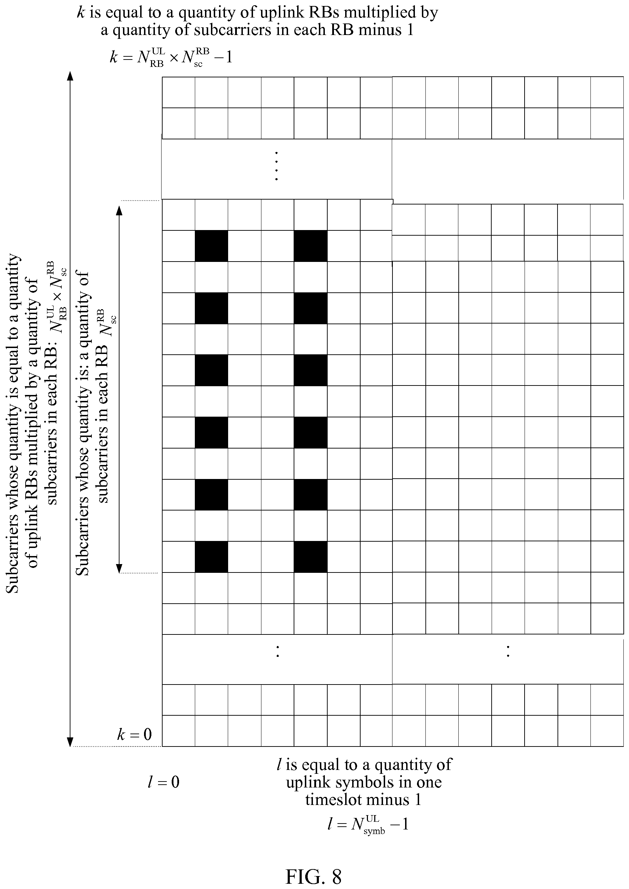

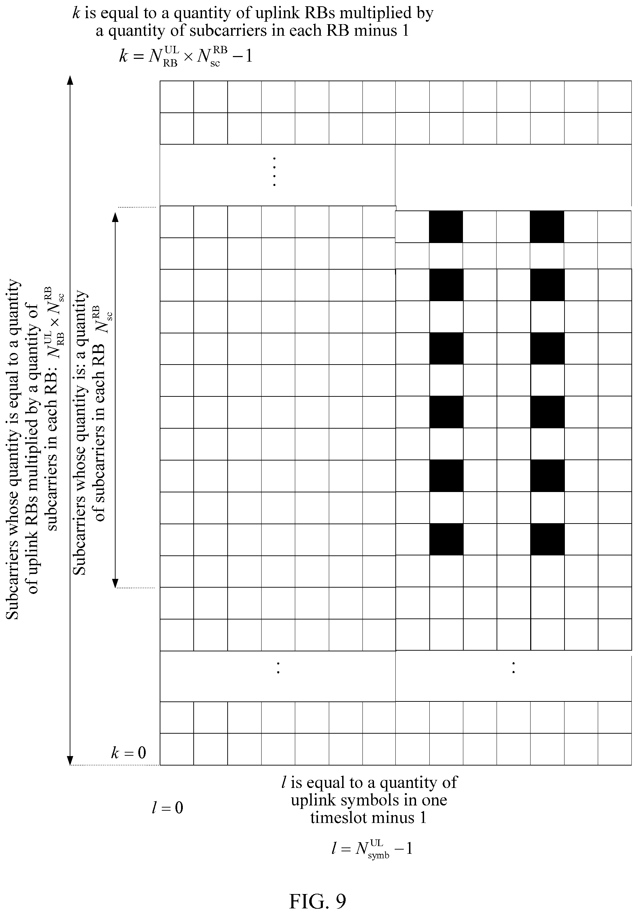

A timeslot in which transmission is performed is indicated by using one bit. For example, 0 indicates a first timeslot, as shown in FIG. 8; and 1 indicates a second timeslot, as shown in FIG. 9.

A start location of each timeslot and the symbol transmission mode are separately configured. For example, in FIG. 9, it is configured in such a manner that an SRS is sent only in the first timeslot, and no SRS is sent in the second timeslot.

[4. Frequency domain configuration]

The frequency domain configuration of the terminal 502 may include:
a manner in which SRSs sent by the terminal 502 on symbols in the SRS subframe occupy frequency domain resources, where the frequency domain resource manner may include, but is not limited to, one of the following manners:

manner 1: SRSs sent by the terminal 502 on symbols in the SRS subframe occupy same frequency domain resources;
manner 2: SRSs sent by the terminal 502 in timeslots in the SRS subframe occupy different frequency domain resources; or
manner 3: SRSs sent by the terminal 502 on symbols in the SRS subframe occupy different frequency domain resources.

Optionally, the frequency domain resource manner may be predefined, or the base station 501 notifies the terminal 502 of configuration information of the frequency domain resource manner.

The foregoing three manners are distinguished and separately described below.

Manner 1

SRSs sent by the terminal 502 on symbols in the SRS subframe occupy same frequency domain resources.

Optionally, in the manner 1, the frequency domain configuration of the terminal 502 may further include:

a bandwidth occupied by an SRS that is sent by a terminal in a current cell, that is, a cell-level frequency domain configuration, where corresponding information may be referred to as cell public bandwidth information $C_{SRS}$;
in the bandwidth occupied by an SRS that is sent by the terminal in the current cell, a bandwidth occupied by an SRS sent by the terminal 502, where corresponding information may be referred to as terminal dedicated bandwidth information $B_{SRS}$; and
a frequency domain start location of the bandwidth occupied by an SRS sent by the terminal 502, where corresponding information may be referred to as frequency domain start location information $n_{RRC}$.

One or more of configuration information of the foregoing three frequency domain configurations may be predefined, and the others non-predefined may be indicated by sending, by the base station 501, configuration information to the terminal 502.

For example, the base station 501 may send the cell public bandwidth information $C_{SRS}$ to indicate the bandwidth occupied by an SRS that is sent by the terminal in the current cell.

For another example, he base station 501 may send the terminal dedicated bandwidth information $B_{SRS}$ to indicate the bandwidth occupied by an SRS sent by the terminal 502.

For another example, the base station 501 may send the frequency domain start location information $n_{RRC}$ to indicate the frequency domain start location of the bandwidth occupied by an SRS sent by the terminal 502.

Optionally, $C_{SRS}$, $B_{SRS}$, and $n_{RRC}$ may be defined in a manner similar to that in the foregoing 3GPP TS36.211. A difference may be that, in this embodiment of the present invention, because provided SRS resources are more than those in the current LTE system, value ranges of the foregoing three parameters may be greater than value ranges of parameters in the current LTE system. For implementation thereof, refer to implementation in a current protocol, and details are not described herein again.

In the manner 1, the terminal 502 may determine, according to the following information, a frequency domain resource occupied by the terminal 502:

the cell public bandwidth information $C_{SRS}$ of the current cell;
the terminal dedicated bandwidth information $B_{SRS}$ of the terminal 502; and
the frequency domain start location information $n_{RRC}$ of the terminal 502.

The terminal 502 may send an SRS starting from the frequency domain start location indicated by $n_{RRC}$ within a bandwidth range indicated by $B_{SRS}$.

Manner 2

SRSs sent by the terminal 502 in timeslots in the SRS subframe occupy different frequency domain resources, that is, a frequency domain resource occupied by an SRS sent in one timeslot is different from a frequency domain resource occupied by an SRS sent in another timeslot.

In the manner 2, there are four optional solutions that can be used to determine a frequency domain resource occupied by an SRS sent by the terminal 502.

Optional solution 1

In the optional solution 1, the frequency domain configuration of the terminal 502 may include:

a bandwidth occupied by an SRS that is sent by a terminal in a current cell, where corresponding information may be referred to as cell public bandwidth information $C_{SRS}$;
in the bandwidth occupied by an SRS that is by the terminal in the current cell, a bandwidth occupied by an SRS that is sent by the terminal 502 in a timeslot with a sequence number $n_s$, where corresponding information may be referred to as terminal dedicated bandwidth information $B_{SRS}^{n_s}$; and
a frequency domain start location of the bandwidth occupied by an SRS that is sent by the terminal in the timeslot with the sequence number $n_s$ in the SRS subframe, where corresponding information may be referred to as frequency domain start location information $n_{RRC}^{n_s}$.

Optionally, the foregoing three configurations may be predefined, or the base station 501 may send configuration information to the terminal 502, to indicate the foregoing three configurations to the terminal 502.

In the optional solution 1,
the terminal 502 may determine, according to the foregoing three configurations, frequency domain resources occupied by SRSs that are sent on symbols in the timeslot with the sequence number $n_s$ in the SRS subframe.

For the timeslot with the sequence number $n_s$ that is used by the terminal 502 to send an SRS and that is in the SRS subframe, the terminal 502 sends an SRS starting from the frequency domain start location indicated by $n_{RRC}^{n_s}$ within a bandwidth range indicated by $B_{SRS}^{n_s}$.

Optional solution 2

In the optional solution 2, the frequency domain configuration of the terminal 502 is the same as the configuration in the optional solution 1, and a difference is that at least one of methods for determining, by the terminal 502, the occupied bandwidth and the frequency domain start location in the timeslot with the sequence number $n_s$ is different. A specific method in the optional solution 2 is as follows:

The terminal 502 determines, according to the following formula, the terminal dedicated bandwidth information $B_{SRS}^{n_s}$ in the timeslot with the sequence number $n_s$:

$$B_{SRS}^{n_s} = (n_s + B_{SRS}) \bmod (B_{SRS}^{\max} + 1),$$

where $B_{SRS}^{\max}$ is a maximum value within a value range of $B_{SRS}$; and/or

the terminal 502 determines, according to the following formula, the frequency domain start location information $n_{RRC}^{n_s}$ in the timeslot with the sequence number $n_s$:

$$n_{RRC}^{n_s} = (n_s + n_{RRC}) \bmod (n_{RRC}^{\max} + 1);$$

or

$$n_{RRC}^{n_s} = \left(n_{RRC}^{n_s - 1} + \left\lfloor \frac{1}{M} \times \left\lfloor N_{RB}^{UL} / n_{RB}^{\min} \right\rfloor \right\rfloor\right) \bmod \left(\left\lfloor N_{RB}^{UL} / n_{RB}^{\min} \right\rfloor + 1\right),$$

where $n_{RRC}^{0} = n_{RRC}$;

or

$$n_{RRC}^{n_s} = \left(\left\lfloor B_{SRS} / n_{RB}^{\min} \right\rfloor + n_{RRC}^{n_s - 1}\right) \bmod (n_{RRC}^{\max} + 1),$$

where $n_{RRC}^{0} = n_{RRC}$;

or

$$n_{RRC}^{n_s} = \left(\left\lfloor B_{SRS}^{n_s - 1} / n_{RB}^{\min} \right\rfloor + n_{RRC}^{n_s - 1}\right) \bmod (n_{RRC}^{\max} + 1),$$

where $n_{RRC}^{0} = n_{RRC}$, and $B_{SRS}^{0} = B_{SRS}$,

where $n_{RRC}^{\max}$ is a maximum value within a value range of $n_{RRC}$, $\frac{1}{M}$ indicates that a frequency hopping granularity is $\frac{1}{M}$ times of a total bandwidth, and a value of M is a positive integer, for example, 2, 3, 4, ..., and $n_{RB}^{\min}$ is a quantity of RBs included in a minimum bandwidth for SRS transmission, and whose value is predefined, for example, the value is 4 in the prior art.

Definitions and methods for configuring $n_{RRC}$ and $B_{SRS}$ are the same as those in the foregoing manner 1, refer to implementation in the manner 1, and details are not described herein again.

Optional solution 3

In the optional solution 3, the frequency domain configuration of the terminal 502 may further include:

a bandwidth occupied by an SRS that is sent by a terminal in a current cell, where corresponding information may be referred to as cell public bandwidth information $C_{SRS}$;

in the bandwidth occupied by an SRS that is by the terminal in the current cell, a same bandwidth occupied in timeslots used by the terminal 502 to send SRSs, where in this case, SRSs sent by the terminal 502 in timeslots occupy a same bandwidth, and information corresponding to the bandwidth may be referred to as terminal dedicated bandwidth information $B_{SRS}$; and

a frequency domain start location of the bandwidth occupied by an SRS that is sent by the terminal in a timeslot with a sequence number $n_s$ in the SRS subframe, where corresponding information may be referred to as frequency domain start location information $n_{RRC}^{n_s}$.

Optionally, the foregoing three configurations may be predefined, or the base station 501 may send configuration information to the terminal 502, to indicate the foregoing three configurations to the terminal 502.

In the optional solution 3, the terminal 502 may determine, according to the foregoing three configurations, frequency domain resources occupied by SRSs that are sent on symbols in the timeslot with the sequence number $n_s$ in the SRS subframe.

For the timeslot with the sequence number $n_s$ that is used by the terminal to send an SRS and that is in the SRS subframe, the terminal 502 sends an SRS starting from the frequency domain start location indicated by $n_{RRC}^{n_s}$ within a bandwidth range indicated by $B_{SRS}$.

Optional solution 4

In the optional solution 4, the frequency domain configuration of the terminal 502 is the same as the configuration in the optional solution 3, and a difference is that a method for determining, by the terminal 502, the frequency domain start location in the timeslot with the sequence number $n_s$ is different. A specific method in the optional solution 4 is as follows:

The terminal 502 determines, according to the following formula, the frequency domain start location information $n_{RRC}^{n_s}$ in the timeslot with the sequence number $n_s$:

$$n_{RRC}^{n_s} = (n_s + n_{RRC}) \bmod (n_{RRC}^{\max} + 1);$$

or

$$n_{RRC}^{n_s} = (n_{RRC}^{n_s-1} + \left\lfloor \frac{1}{M} \times \left\lfloor N_{RB}^{UL} / n_{RB}^{\min} \right\rfloor \right\rfloor) \bmod (\left\lfloor N_{RB}^{UL} / n_{RB}^{\min} \right\rfloor + 1), \text{ where } n_{RRC}^{0} = n_{RRC};$$

or

$$n_{RRC}^{n_s} = (\left\lfloor B_{SRS} / n_{RB}^{\min} \right\rfloor + n_{RRC}^{n_s-1}) \bmod (n_{RRC}^{\max} + 1), \text{ where } n_{RRC}^{0} = n_{RRC};$$

or

$$n_{RRC}^{n_s} = (\left\lfloor B_{SRS}^{n_s-1} / n_{RB}^{\min} \right\rfloor + n_{RRC}^{n_s-1}) \bmod (n_{RRC}^{\max} + 1),$$

where $n_{RRC}^{0} = n_{RRC}$, and $B_{SRS}^{0} = B_{SRS}$,

where $n_{RRC}^{\max}$ is a maximum value within a value range of $n_{RRC}$, $\dfrac{1}{M}$ indicates that a frequency hopping granularity is

$$\frac{1}{M}$$

times of a total bandwidth, and a value of M is a positive integer, for example, 2, 3, 4, ..., and $n_{RB}^{\min}$ is a quantity of RBs included in a minimum bandwidth for SRS transmission, and whose value is predefined, for example, the value is 4 in the prior art.

Definitions and methods for configuring $n_{RRC}$ and $B_{SRS}$ are the same as those in the foregoing manner 1, refer to implementation in the manner 1, and details are not described herein again.

With reference to the four optional solutions in the manner 2, it can be seen that the bandwidth occupied by an SRS sent by the terminal 502 is determined by using both the cell public bandwidth information $C_{SRS}$ and the terminal dedicated bandwidth information, and a frequency domain resource occupied by the terminal 502 is uniquely determined by using the two pieces of information: the terminal dedicated bandwidth information and the frequency domain start location information.

Frequency domain resources occupied by the terminal 502 in different timeslots are different provided that at least one of the two pieces of information: the terminal dedicated bandwidth information and the frequency domain start location information for determining a frequency domain resource occupied by the terminal 502, is different in timeslots.

Referring to the following table, different definitions of the terminal dedicated bandwidth information and the frequency domain start location information are shown. The optional solutions in the manner 2 include, but are not limited to, the following eight types. To distinguish between numbering manners of the foregoing optional solutions, herein, different optional solutions are distinguished by using A, B, ..., and the like.

| Optional solution | Terminal dedicated bandwidth information | Frequency domain start location information |
|---|---|---|
| Optional solution A (that is, the foregoing optional solution 1) | For different timeslots, the terminal dedicated bandwidth information is different (predefined, or configured by sending, by the base station 501, configuration information) | For different timeslots, the frequency domain start location information is different (predefined, or configured by sending, by the base station 501, configuration information) |
| Optional solution B | For different timeslots, the terminal dedicated bandwidth information is different (predefined, or configured by sending, by the base station 501, configuration information) | For different timeslots, the frequency domain start location information is the same (predefined, or configured by sending, by the base station 501, configuration information) |
| Optional solution C | For different timeslots, the terminal dedicated bandwidth information is different (predefined, or configured by sending, by the base station 501, configuration information) | For different timeslots, the terminal dedicated bandwidth information is obtained through calculation according to uniform frequency domain start location information $n_{RRC}$, and is a function of a sequence number $n_s$ of a timeslot |
| Optional solution D (that is, the foregoing optional 1 solution 2) | For different timeslots, the terminal dedicated bandwidth information is obtained through calculation according to uniform terminal dedicated bandwidth information $B_{SRS}$, and is a function of a sequence number $n_s$ of a timeslot | For different timeslots, the terminal dedicated bandwidth information is obtained through calculation according to uniform frequency domain start location information $n_{RRC}$, and is a function of a sequence number $n_s$ of a timeslot |
| Optional solution E | For different timeslots, the terminal dedicated bandwidth information is obtained through calculation according to uniform terminal dedicated bandwidth information $B_{SRS}$, and is n a function of a sequence number $n_s$ of a timeslot | For different timeslots, the frequency domain start location information is different (predefined, or configured by sending, by the base station 501, configuration information) |
| Optional solution F | For different timeslots, the terminal | For different timeslots, the frequency |

(continued)

| Optional solution | Terminal dedicated bandwidth information | Frequency domain start location information |
|---|---|---|
| | dedicated bandwidth information is obtained through calculation according to uniform terminal dedicated bandwidth information $B_{SRS}$, and is $n$ a function of a sequence number $n_s$ of a timeslot | domain start location information is the same (predefined, or configured by sending, by the base station 501, configuration information) |
| Optional solution G (that is, the foregoing optional solution 3) | For different timeslots, the terminal dedicated bandwidth information is the same (predefined, or configured by sending, by the base station 501, configuration information) | For different timeslots, the frequency domain start location information is different (predefined, or configured by sending, by the base station 501, configuration information) |
| Optional solution H (that is, the foregoing optional solution 4) | For different timeslots, the terminal dedicated bandwidth information is the same (predefined, or configured by sending, by the base station 501, configuration information) | For different timeslots, the terminal dedicated bandwidth information is obtained through calculation according to uniform frequency domain start location information $n_{RRC}$, and is a function of a sequence number $n_s$ of a timeslot |

Manner 3

SRSs sent by the terminal 502 on symbols in the SRS subframe occupy different frequency domain resources, that is, a frequency domain resource occupied by an SRS sent on one symbol is different from a frequency domain resource occupied by an SRS sent on another symbol.

The manner 3 is similar to the manner 2, and there are also four optional solutions that may be used to determine a frequency domain resource occupied by an SRS sent by the terminal 502.

Optional solution 1

In the optional solution 1, the frequency domain configuration of the terminal 502 may further include:

a bandwidth occupied by an SRS that is sent by a terminal in a current cell, where corresponding information may be referred to as cell public bandwidth information $C_{SRS}$;

in the bandwidth occupied by an SRS that is sent by the terminal in the current cell, a bandwidth occupied by an SRS that is sent by the terminal 502 on a symbol with a sequence number $l$, where corresponding information may be referred to as terminal dedicated bandwidth information $B_{SRS}^{l}$; and

a frequency domain start location of the bandwidth occupied by an SRS that is sent by the terminal on the symbol with the sequence number $l$ in the SRS subframe, where corresponding information may be referred to as frequency domain start location information $n_{RRC}^{l}$.

Optionally, the foregoing three pieces of configuration information may be predefined, or the base station 501 may send configuration information to the terminal 502, to indicate the foregoing three pieces of configuration information to the terminal 502.

In the optional solution 1,

the terminal 502 may determine, according to the foregoing three pieces of configuration information $C_{SRS}$, $B_{SRS}^{l}$, and

$$n_{RRC}^{l}$$

, a frequency domain resource occupied by an SRS that is sent on the symbol with the sequence number $l$ in the SRS subframe.

For the symbol with the sequence number $l$ that is used by the terminal to send an SRS and that is in the SRS subframe, the terminal 502 sends an SRS starting from the frequency domain start location indicated by $n_{RRC}^{l}$ within a bandwidth range indicated by $B_{SRS}^{l}$ .

Optional solution 2

In the optional solution 2, the frequency domain configuration of the terminal 502 is the same as the configuration in the optional solution 1, and a difference is that at least one of methods for determining, by the terminal 502, the occupied bandwidth and the frequency domain start location on the symbol with the sequence number $l$ is different. A specific method in the optional solution 2 is as follows:

The terminal 502 determines, according to the following formula, the terminal dedicated bandwidth information $B_{SRS}^{l}$ on the symbol with the sequence number $l$ :

$$B_{SRS}^{l} = (l + B_{SRS})\bmod(B_{SRS}^{\max}+1)$$, where $B_{SRS}^{\max}$ is a maximum value within a value range of $B_{SRS}$ ; and/or the terminal 502 determines, according to the following formula, the frequency domain start location information $n_{RRC}^{l}$ on the symbol with the sequence number $l$ :

$$n_{RRC}^{l} = (l + n_{RRC})\bmod(n_{RRC}^{\max}+1);$$

or

$$n_{RRC}^{l} = (n_{RRC}^{l-1} + \left\lfloor \frac{1}{M} \times \left\lfloor N_{RB}^{UL} / n_{RB}^{\min} \right\rfloor \right\rfloor)\bmod(\left\lfloor N_{RB}^{UL} / n_{RB}^{\min} \right\rfloor+1)$$, where $n_{RRC}^{0} = n_{RRC}$ ;

or

$$n_{RRC}^{l} = (\left\lfloor B_{SRS} / n_{RB}^{\min} \right\rfloor + n_{RRC}^{l-1})\bmod(n_{RRC}^{\max}+1)$$, where $n_{RRC}^{0} = n_{RRC}$ ;

or

$$n_{RRC}^{l} = (\left\lfloor B_{SRS}^{l-1} / n_{RB}^{\min} \right\rfloor + n_{RRC}^{l-1})\bmod(n_{RRC}^{\max}+1),$$

where $n_{RRC}^{0} = n_{RRC}$ , and $B_{SRS}^{0} = B_{SRS}$ ,

where $n_{RRC}^{\max}$ is a maximum value within a value range of $n_{RRC}$, $\dfrac{1}{M}$ indicates that a frequency hopping granularity

is $\dfrac{1}{M}$ times of a total bandwidth, and a value of M is a positive integer, for example, 2, 3, 4, ..., and $n_{RB}^{\min}$ is a quantity of RBs included in a minimum bandwidth for SRS transmission, and whose value is predefined, for example, the value is 4 in the prior art.

Definitions and methods for configuring $n_{RRC}$ and $B_{SRS}$ are the same as those in the foregoing manner 1, refer to implementation in the manner 1, and details are not described herein again.

Optional solution 3

In the optional solution 3, the frequency domain configuration of the terminal 502 may further include:

a bandwidth occupied by an SRS that is sent by a terminal in a current cell, where corresponding information may be referred to as cell public bandwidth information $C_{SRS}$ ;
in the bandwidth occupied by an SRS that is by the terminal in the current cell, a same bandwidth occupied by SRSs that are sent by the terminal 502 on symbols, where corresponding information may be referred to as terminal dedicated bandwidth information $B_{SRS}$; and
a frequency domain start location of a bandwidth occupied by an SRS that is sent by the terminal on a symbol with a sequence number $l$ in the SRS subframe, where corresponding information may be referred to as frequency domain start location information $n_{RRC}^{l}$ .

Optionally, the foregoing three pieces of configuration information may be predefined, or the base station 501 may send configuration information to the terminal 502, to indicate the foregoing three pieces of configuration information to the terminal 502.
In the optional solution 3,
the terminal 502 may determine, according to the foregoing three pieces of configuration information $C_{SRS}$, $B_{SRS}$, and

$n_{RRC}^{l}$ , a frequency domain resource occupied by an SRS that is sent on the symbol with the sequence number $l$ in the SRS subframe.
For the symbol with the sequence number $l$ that is used by the terminal to send an SRS and that is in the SRS subframe, the terminal 502 sends an SRS starting from the frequency domain start location indicated by $n_{RRC}^{l}$ within a bandwidth range indicated by $B_{SRS}$.

Optional solution 4

In the optional solution 4, the frequency domain configuration of the terminal 502 is the same as the configuration in the optional solution 3, and a difference is that a method for determining, by the terminal 502, the frequency domain start location on the symbol with the sequence number $l$ is different. A specific method in the optional solution 4 is as follows:
The terminal 502 determines, according to the following formula, the frequency domain start location information

$n_{RRC}^{l}$ on the symbol with the sequence number $l$ :

$$ n_{RRC}^{l} = (l + n_{RRC})\bmod(n_{RRC}^{\max}+1) \text{;} $$

or

$$n_{RRC}^{l} = (n_{RRC}^{l-1} + \left\lfloor \frac{1}{M} \times \left\lfloor N_{RB}^{UL} / n_{RB}^{\min} \right\rfloor \right\rfloor) \bmod (\left\lfloor N_{RB}^{UL} / n_{RB}^{\min} \right\rfloor + 1) \text{, where } n_{RRC}^{0} = n_{RRC};$$

or

$$n_{RRC}^{l} = (\left\lfloor B_{SRS} / n_{RB}^{\min} \right\rfloor + n_{RRC}^{l-1}) \bmod (n_{RRC}^{\max} + 1) \text{, where } n_{RRC}^{0} = n_{RRC};$$

or

$$n_{RRC}^{l} = (\left\lfloor B_{SRS}^{l-1} / n_{RB}^{\min} \right\rfloor + n_{RRC}^{l-1}) \bmod (n_{RRC}^{\max} + 1),$$

where

$$n_{RRC}^{0} = n_{RRC} \text{, and } B_{SRS}^{0} = B_{SRS},$$

where $n_{RRC}^{\max}$ is a maximum value within a value range of $n_{RRC}$, $\dfrac{1}{M}$ indicates that a frequency hopping granularity is times of a total bandwidth, and a value of M is a positive integer, for example, 2, 3, 4, ..., and $n_{RB}^{\min}$ is a quantity of RBs included in a minimum bandwidth for SRS transmission, and whose value is predefined, for example, the value is 4 in the prior art.

Definitions and methods for configuring $n_{RRC}$ and $B_{SRS}$ are the same as those in the foregoing manner 1, refer to implementation in the manner 1, and details are not described herein again.

Similar to the manner 2, referring to the following table, different definitions of the terminal dedicated bandwidth information and the frequency domain start location information are shown. The optional solutions in the manner 3 may also include, but are not limited to, the following eight types. To distinguish between numbering manners of the foregoing optional solutions, herein, different optional solutions are distinguished by using A, B, ..., and the like.

| Optional solution | Terminal dedicated bandwidth information | Frequency domain start location information |
| --- | --- | --- |
| Optional solution A (that is, the foregoing optional solution 1) | For different symbols, the terminal dedicated bandwidth information is different (predefined, or configured by sending, by the base station 501, configuration information) | For different symbols, the frequency domain start location information is different (predefined, or configured by sending, by the base station 501, configuration information) |
| Optional solution B | For different symbols, the terminal dedicated bandwidth information is different (predefined, or configured by sending, by the base station 501, configuration information) | For different symbols, the frequency domain start location information is the same (predefined, or configured by sending, by the base station 501, configuration information) |
| Optional solution C | For different symbols, the terminal dedicated bandwidth information is different (predefined, or configured by sending, by the base station 501, configuration information) | For different symbols, the terminal dedicated bandwidth information is obtained through calculation according to uniform frequency domain start location information $n_{RRC}$, and is a function of a sequence number $l$ of a symbol |

(continued)

| Optional solution | Terminal dedicated bandwidth information | Frequency domain start location information |
|---|---|---|
| Optional solution D (that is, the foregoing optional 1 solution 2) | For different symbols, the terminal dedicated bandwidth information is obtained through calculation according to uniform terminal dedicated bandwidth information $B_{SRS}$, and is a function of a sequence number $l$ of a symbol | For different symbols, the terminal dedicated bandwidth information is obtained through calculation according to uniform frequency domain start location information $n_{RRC}$, and is a function of a sequence number $l$ of a symbol |
| Optional solution E | For different symbols, the terminal dedicated bandwidth information is obtained through calculation according to uniform terminal dedicated bandwidth information $B_{SRS}$, and is a function of a sequence number $l$ of a symbol | For different symbols, the frequency domain start location information is different (predefined, or configured by sending, by the base station 501, configuration information) |
| Optional solution F | For different symbols, the terminal dedicated bandwidth information is obtained through calculation according to uniform terminal dedicated bandwidth information $B_{SRS}$, and is a function of a sequence number $l$ of a symbol | For different symbols, the frequency domain start location information is the same (predefined, or configured by sending, by the base station 501, configuration information) |
| Optional solution G (that is, the foregoing optional solution 3) | For different symbols, the terminal dedicated bandwidth information is the same (predefined, or configured by sending, by the base station 501, configuration information) | For different symbols, the frequency domain start location information is different (predefined, or configured by sending, by the base station 501, configuration information) |
| Optional solution H (that is, the foregoing optional solution 4) | For different symbols, the terminal dedicated bandwidth information is the same (predefined, or configured by sending, by the base station 501, configuration information) | For different symbols, the terminal dedicated bandwidth information is obtained through calculation according to uniform frequency domain start location information $n_{RRC}$, and is a function of a sequence number $l$ of a symbol |

In the foregoing [4. frequency domain configuration], a frequency domain resource refers to a physical resource block (Physical Resource Block, PRB). For example, that frequency domain resources occupied by the terminal 502 on different symbols are different means that PRBs occupied by the terminal 502 on different symbols are different.

The frequency domain configuration is different from the following [5. comb configuration]. The comb configuration refers to subcarriers specifically occupied by the terminal 502 in a PRB. If the terminal 502 uses a comb structure when sending an SRS, it is generally but not limited to that intervals between subcarriers occupied by the terminal on different symbols are the same. For example, if subcarriers occupied on a symbol numbered 2 have an interval of two subcarriers from each other, subcarriers occupied on a symbol numbered 4 also have an interval of two subcarriers from each other.

That comb configurations of the terminal 502 in different timeslots or on different symbols are different generally mean that start locations of occupied comb subcarriers are different.

[5. Comb configuration]

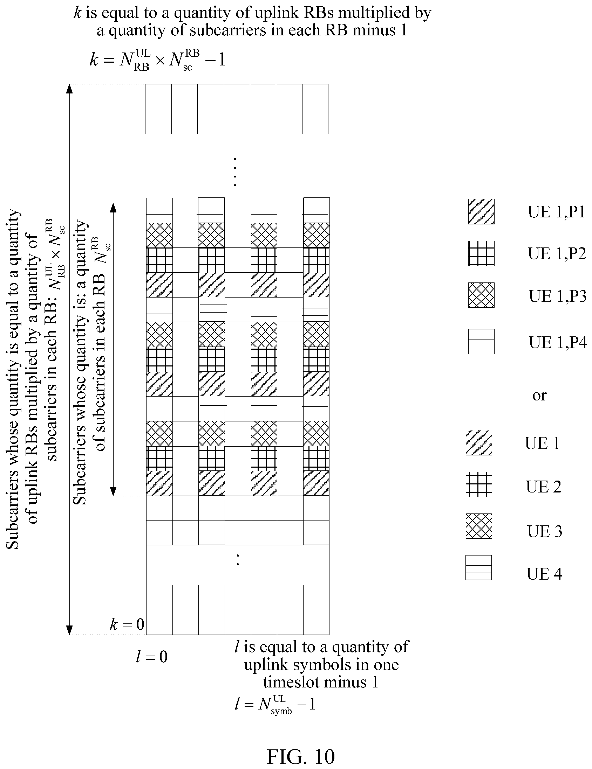

A comb structure with an interval of more than one subcarrier (an interval of $n_{comb}$ subcarriers, where $n_{comb}$ may be determined according to a coherence bandwidth) may be used for SRS transmission. However, in the current LTE system, when a comb structure is used for SRS transmission, the interval has to be one subcarrier only. Therefore, by means of a solution provided in this embodiment of the present invention, more terminals or antennas can be contained. As shown in FIG. 10, transmission is performed at an interval of three subcarriers. Antenna ports P1 to P4 are different antenna ports of the terminal 502 (UE 1); and the UE 1, UE 2, UE 3, and UE 4 are different terminals in a current cell.

$n_{comb}$ may be predefined, or may be notified by the base station 501 to the terminal 502 by sending a configuration message.

For example, if two bits are used for notification, 00 indicates an interval of one subcarrier, 01 indicates an interval of two subcarriers, 10 indicates an interval of three subcarriers, or 11 indicates an interval of four subcarriers.

The terminal 502 may send SRSs by using a single antenna or multiple antennas.

If the terminal 502 sends SRSs by using a single antenna, for each PRB in each symbol occupied by an SRS sent by the terminal 502, the terminal 502 determines occupied nonconsecutive subcarriers in the PRB on the symbol, and occupied subcarriers have an interval of $n_{comb}$ subcarriers from each other.

If the terminal 502 sends SRSs by using multiple antennas, for each PRB on one symbol occupied by an SRS sent by the terminal 502, the terminal 502 determines occupied nonconsecutive subcarriers in the PRB on the symbol, and for one antenna used by the terminal 502, subcarriers occupied by SRSs that are sent by using the antenna have an interval of $n_{comb}$ subcarriers from each other.

Optionally, the comb configuration of the terminal 502 may further include: a manner in which SRSs sent by the terminal 502 on symbols in the SRS subframe occupy comb subcarriers.

The comb subcarrier manner may include, but is not limited to, one of the following manners:

manner 1: for different symbols occupied by SRSs sent by the terminal 502, the terminal 502 occupies same comb subcarriers on the symbols; or

manner 2: for symbols that are occupied by SRSs sent by the terminal 502 and that are located in different timeslots, the terminal 502 occupies different comb subcarriers on the symbols; or

manner 3: for different symbols occupied by SRSs sent by the terminal 502, the terminal 502 occupies different comb subcarriers on the symbols.

For the foregoing several comb subcarrier manners, for different symbols, frequency domain resources occupied by SRSs sent by the terminal 502 may be the same or may be different.

Optionally, the comb subcarrier manner may be predefined, or may be notified by the base station 501 to the terminal 502 by sending configuration information.

The foregoing three manners are separately described below.

Manner 1

In the manner 1, for different symbols occupied by SRSs sent by the terminal 502, the terminal 502 occupies same comb subcarriers on the symbols, and the comb configuration of the terminal 502 may further include:

a location, of a start subcarrier in subcarriers occupied by SRSs sent by the terminal 502, in the PRB, where corresponding configuration information may be $\overline{k}_{TC}$,

where $\overline{k}_{TC} \in \{0,1,2,..., n_{comb}\}$.

Optionally, the configuration may be predefined, or may be notified by the base station 501 to the terminal 502 by sending a configuration message.

Manner 2

In the manner 2, for symbols that are occupied by SRSs sent by the terminal 502 and that are located in different timeslots, the terminal 502 occupies different comb subcarriers on the symbols, and the comb configuration of the terminal 502 may further include:

for each timeslot that can be used by the terminal 502 and that is in the SRS subframe, a location, of a start subcarrier in subcarriers occupied by SRSs that can be sent by the terminal 502 in the timeslot, in the PRB.

For each timeslot that can be used by the terminal 502 and that is in the SRS subframe, a configuration parameter of the configuration may be $\overline{k}_{TC} \in \{0,1,2,..., n_{comb}\}$.

Optionally, the configuration may be predefined, or may be notified by the base station 501 to the terminal 502 by sending a configuration message.

Alternatively, in the manner 2, for a timeslot with a sequence number $n_s$ that can be used by the terminal 502 and that is in the SRS subframe, a location parameter $k_{TC}^{(n_s)}$ of a location, of a start subcarrier in subcarriers occupied by SRSs that can be sent by the terminal 502 in the timeslot, in the PRB may be determined in the following manner:

$$k_{TC}^{(n_s)} = (\overline{k}_{TC} + n_s) \bmod (n_{comb} + 1)$$.

Therefore, for the timeslot with the sequence number $n_s$ that can be used by the terminal 502 and that is in the SRS subframe, the terminal 502 sends an SRS starting from the start subcarrier indicated by $k_{TC}^{(n_s)}$.

For timeslots that can be used by the terminal 502 and that are in the SRS subframe, $\overline{k}_{TC}$ is uniformly configured, and may be predefined, or may be notified by the base station 501 to the terminal 502 by sending a configuration message.

Manner 3

In the manner 3, for different symbols occupied by SRSs sent by the terminal 502, the terminal 502 occupies different comb subcarriers on the symbols, and the comb configuration of the terminal 502 may further include:

for each symbol that can be used by the terminal 502 and that is in the SRS subframe, a location, of a start subcarrier in subcarriers occupied by SRSs that can be sent by the terminal 502 on the symbol, in the PRB.

For each symbol that can be used by the terminal 502 and that is in the SRS subframe, a configuration parameter of the configuration may be $\overline{k}_{TC} \in \{0,1,2,..., n_{comb}\}$.

Optionally, the configuration may be predefined, or may be notified by the base station 501 to the terminal 502 by sending a configuration message.

Alternatively, in the manner 3, for a symbol with a sequence number *l* that can be used by the terminal 502 and that is in the SRS subframe, a location parameter $k_{TC}^{(l)}$ of a location, of a start subcarrier in subcarriers occupied by SRSs that can be sent by the terminal 502 on the symbol, in the PRB may be determined according to the following formula:

$$k_{TC}^{(l)} = (\overline{k}_{TC} + l)\bmod(n_{comb} + 1)$$

Therefore, for the symbol with the sequence number *l* that can be used by the terminal 502 and that is in the SRS subframe, the terminal 502 sends SRSs starting from the start sub-carrrier indicated by $k_{TC}^{(l)}$.

For symbols that can be used by the terminal 502 and that are in the SRS subframe, $\overline{k}_{TC}$ is uniformly configured, and may be predefined, or may be notified by the base station 501 to the terminal 502 by sending a configuration message.

[6. Transmission sequence configuration]

A manner in which the terminal 502 uses an SRS basic sequence includes, but is not limited to, one of the following manners:

SRSs sent by the terminal 502 on different symbols in one SRS subframe use same SRS basic sequences; for example, this manner is used during non-group hopping (group hopping); or

SRSs sent by the terminal 502 in different timeslots in one SRS subframe use different SRS basic sequences, where, for example, this manner is used during group hopping; or

SRSs sent by the terminal 502 on different symbols in one SRS subframe use different SRS basic sequences; for example, this manner is used during group hopping.

If SRSs sent by the terminal 502 in different timeslots in one SRS subframe use different SRS basic sequences, the terminal 502 may determine, according to the following formula, a group hopping format $f_{gh}(n_s)$ of an SRS basic sequence that is used to send an SRS in a timeslot with a sequence number $n_s$ in the SRS subframe:

$$f_{gh}(n_s) = \left(\sum_{i=0}^{7} c(8n_s + i) \cdot 2^i\right)\bmod 30 ,$$

$$c_{init} = \left\lfloor \frac{n_{ID}^{cell}}{30} \right\rfloor$$

where c is a pseudo-random sequence, and is initialized as , ⌊ ⌋ indicates rounding down, and $n_{ID}^{cell}$ is a cell identifier of a current cell.

If SRSs sent by the terminal 502 on different symbols in one SRS subframe use different SRS basic sequences, the terminal 502 may determine, according to the following formula, a group hopping format $f_{gh}(l)$ of an SRS basic sequence that is used to send an SRS on a symbol with a sequence number $l$ :

$$f_{gh}(l) = \left( \sum_{i=0}^{7} c(8n_s + i) \cdot 2^i + l \right) \bmod 30 \; ,$$

where c is a pseudo-random sequence, and is initialized as $c_{init} = \left\lfloor \dfrac{n_{ID}^{cell}}{30} \right\rfloor$ , $\lfloor \; \rfloor$ indicates rounding down, and $n_{ID}^{cell}$ is a cell identifier of a current cell.

If the terminal 502 sends SRSs by using multiple antennas, a quantity of antennas is $N_{ap} \in \{1,2,4,8,10,16,...\}$, and may be predefined, or may be notified by the base station 501 to the terminal 502 by using higher layer signaling. To implement multi-antenna transmission, the following three manners may be used:

Manner 1: code division

In the manner 1, for an antenna with an antenna sequence number $\tilde{p}$, an SRS sequence is:

$$r_{SRS}^{(\tilde{p})}(n) = r_{u,v}^{(\alpha_{\tilde{p}})}(n) = e^{j\alpha_{\tilde{p}}n} \bar{r}_{u,v}(n) \; , \text{ where } \; 0 \le n < M_{sc}^{RS} \; ,$$

where $\bar{r}_{u,v}(n)$ is a basic sequence determined by $u$ and $v$, $u$ is a number of a sequence group, $v$ is a number of a sequence, and $M_{sc}^{RS}$ is a length of an SRS sequence. Optionally, the transmission sequence configuration may further include: $n_{SRS}^{cs}$. The terminal 502 may determine, according to $n_{SRS}^{cs}$, a cyclic shift $\alpha_{\tilde{p}}$ of an SRS sequence of an SRS that is sent on the antenna with the sequence number $\tilde{p}$.

Optionally, the configuration may be predefined, or may be notified by the base station 501 to the terminal 502 by sending a configuration message.

Optionally, $\alpha_{\tilde{p}}$ meets:

$$\alpha_{\tilde{p}} = 2\pi \frac{n_{SRS}^{cs,\tilde{p}}}{2N_{ap}} \; ,$$

$$n_{SRS}^{cs,\tilde{p}} = \left( n_{SRS}^{cs} + \frac{2N_{ap}\tilde{p}}{N_{ap}} \right) \bmod 2N_{ap} \; ,$$

where $N_{ap}$ is a quantity of antennas used by the terminal 502 to send SRSs, $n_{SRS}^{cs}$ is a parameter used to determine a cyclic shift of an SRS sequence of an SRS sent by the terminal 502 on each antenna, $n_{SRS}^{cs} = \{0, 1, 2, 3, 4, 5, 6, 7\}$, which may be configured by using higher layer signaling or predefined, the parameter may be different for different terminals, to reduce interference between terminals, and $\tilde{p} \in \{0,1,...,N_{ap}-1\}$.

Manner 2: frequency division

When combs have an interval of $n_{comb} \ge 1$ subcarriers, when $N_{ap} \ge 2$, different antennas may be mapped to different combs.

For example, the following formula may be used for calculation:

$$k_{TC}^{(p)} = (\overline{k}_{TC} + \tilde{p}) \bmod (n_{comb} + 1)$$ ,

where $\overline{k}_{TC} \in \{0,1,2..., n_{comb}\}$. Optionally, the parameter may be predefined, or may be notified by the base station 501 to the terminal 502 by sending a configuration message.

Manner 3: time division

Different antennas may occupy different symbols. Compared with code division, better coverage can be obtained in time division.

For example, a total quantity of antennas for current transmission is $N_{ap}$, and a total quantity of occupied symbols in one subframe is $l_{sum}$. In this case, an antenna $\tilde{p} \in \{0,1,2,.., N_{ap}\text{-}1\}$ occupies a configured ($\tilde{l^p} = (\tilde{p} \bmod l_{sum})+1$)$^{th}$ symbol.

For example, when there are eight antennas and four symbols, antennas 0 and 4 may use a first symbol, antennas 1 and 5 may use a second symbol, antennas 2 and 6 may use a third symbol, and antennas 3 and 7 may use a fourth symbol.

Alternatively, any two or three of the foregoing three manners: code division, frequency division, and time division, may be used at the same time.

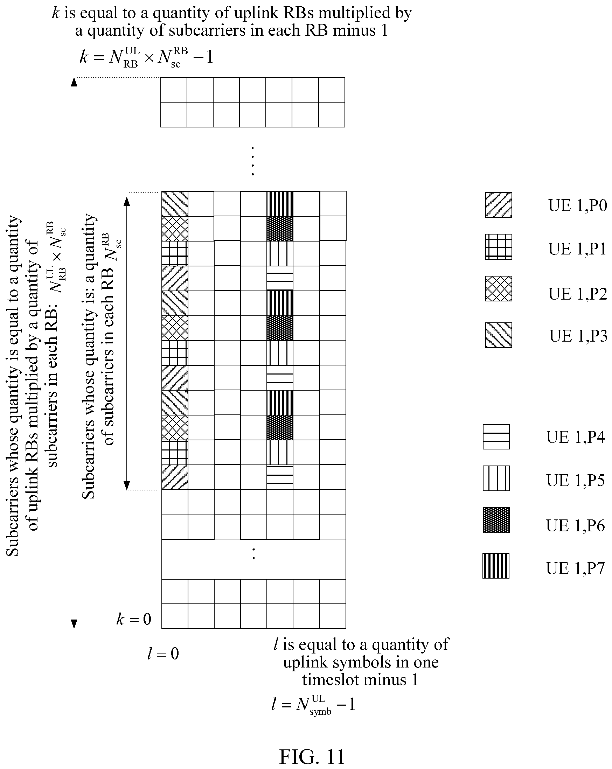

For example, code division, time division, and frequency division are used at the same time. When there are eight antennas, a quantity of SRS symbols is two, and an interval is three subcarriers, antennas 0, 2, 4, and 6 perform transmission on different subcarriers in a first symbol, and antennas 1, 3, 5, and 7 perform transmission on different subcarriers in a second symbol, as shown in FIG. 11, where antenna ports P0 to P7 are different antenna ports of the terminal 502 (UE 1).

Because a multi-antenna solution of code division, frequency division, and time division can be used, SRS transmission by using more antennas is supported.

The foregoing configurations may be used in combination. For example, [4. frequency domain configuration] and [5. comb configuration] may be used in combination, to implement SRS frequency hopping.

An SRS frequency hopping solution may include:

solution 1: timeslot-level frequency hopping; and
solution 2: symbol-level frequency hopping.

By means of different SRS frequency hopping solutions, a frequency diversity gain can be obtained, thereby improving SRS transmission performance.

The two frequency hopping solutions are separately described in detail below.

Solution 1: timeslot-level frequency hopping.

The timeslot-level frequency hopping includes four types, and a specific frequency hopping manner to be used may be predefined, or may be notified by the base station 501 to the terminal 502 by sending a configuration message. For example, the base station sends configuration information of two bits to the terminal 502 by using higher layer

$$I_{hop}^{slot} \in \{0,1,2,3\}$$

signaling, to indicate a frequency hopping option .

Four optional timeslot-level frequency hopping manners are described below. An actual frequency hopping manner is not limited to the following four types, and the following are only examples.

Timeslot-level frequency hopping manner 1

SRSs sent by the terminal 502 occupy same physical resource blocks (Physical Resource Block, PRB) (that is, frequency domain resources occupied in different timeslots are the same) and same comb subcarriers in different timeslots.

Timeslot-level frequency hopping manner 2

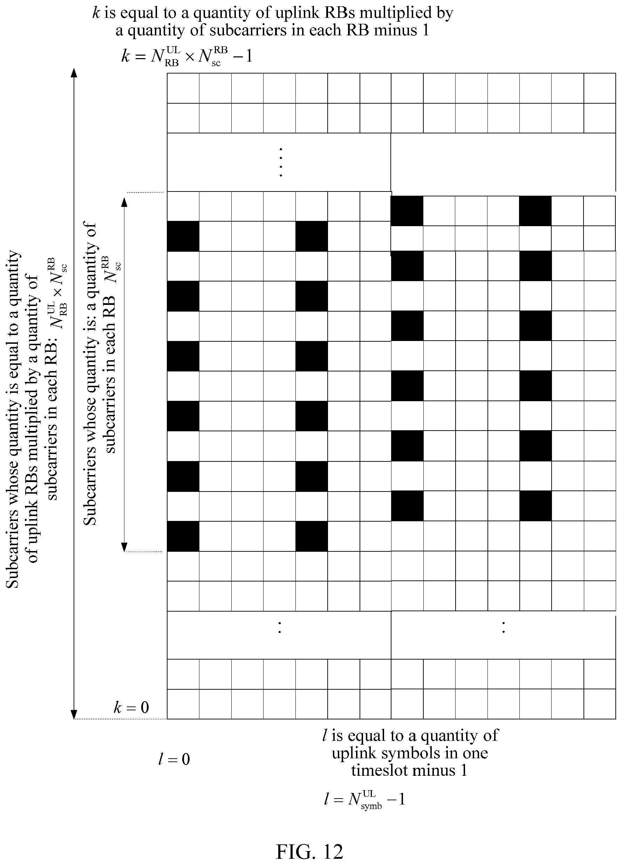

SRSs sent by the terminal 502 occupy same PRBs (that is, frequency domain resources occupied in different timeslots are the same) and different comb subcarriers in different timeslots, as shown in FIG. 12. For a configuration of a comb subcarrier, refer to the descriptions in [5. Comb configuration], and for a configuration of PRBs in different timeslots, refer to [4. Frequency domain configuration].

Timeslot-level frequency hopping manner 3

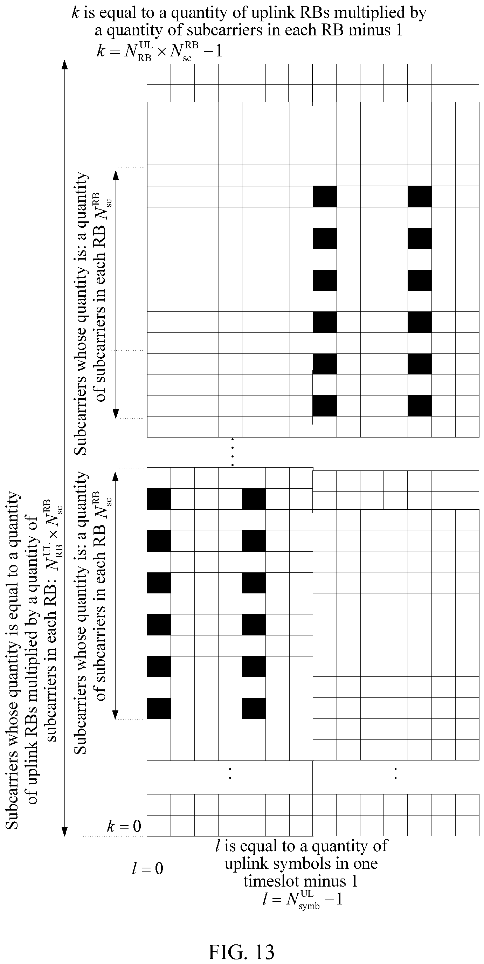

SRSs sent by the terminal 502 occupy different PRBs (that is, frequency domain resources occupied in different timeslots are different) and same comb subcarriers in different timeslots, as shown in FIG. 13. For a configuration of a comb subcarrier, refer to the descriptions in [5. Comb configuration], and for a configuration of PRBs in different timeslots, refer to [4. Frequency domain configuration].

Timeslot-level frequency hopping manner 4

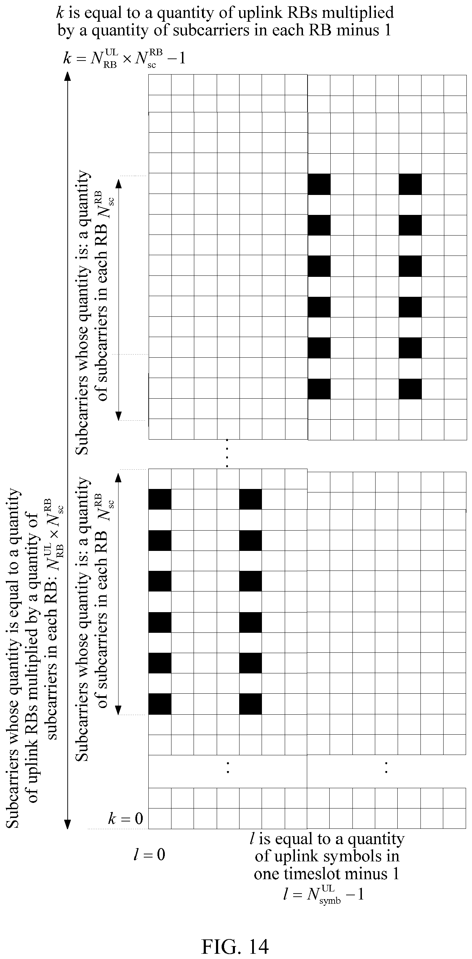

SRSs sent by the terminal 502 occupy different PRBs (that is, frequency domain resources occupied in different timeslots are different) and different comb subcarriers in different timeslots, as shown in FIG. 14. For a configuration of a comb subcarrier, refer to the descriptions in [5. Comb configuration], and for a configuration of PRBs in different timeslots, refer to [4. Frequency domain configuration].

Solution 2: symbol-level frequency hopping

Similar to the timeslot-level frequency hopping, the symbol-level frequency hopping also includes four types, and a specific frequency hopping manner to be used may also be predefined, or may also be notified by the base station 501 to the terminal 502 by sending a configuration message. For example, configuration information of two bits is sent

$$I_{hop}^{symbol} \in \{0,1,2,3\}$$

to the terminal 502 by using higher layer signaling, to indicate a frequency hopping option $I_{hop}^{symbol} \in \{0,1,2,3\}$ .

Four optional symbol-level frequency hopping manners are described below. An actual frequency hopping manner is not limited to the following four types, and the following are only examples.

Symbol-level frequency hopping manner 1

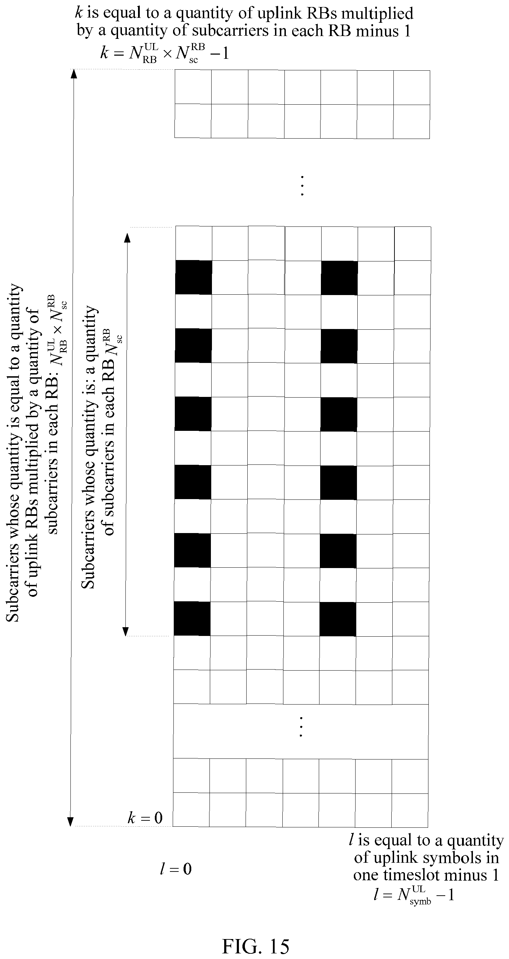

SRSs sent by the terminal 502 occupy same PRBs (that is, frequency domain resources occupied on different symbols are the same) and same comb subcarriers on different symbols, as shown in FIG. 15. Resource elements (Resource Element, RE) of a same pattern belong to a same terminal in a current cell. For a configuration of a comb subcarrier, refer to the descriptions in [5. Comb configuration], and for a configuration of PRBs on different symbols, refer to [4. Frequency domain configuration].

Symbol-level frequency hopping manner 2

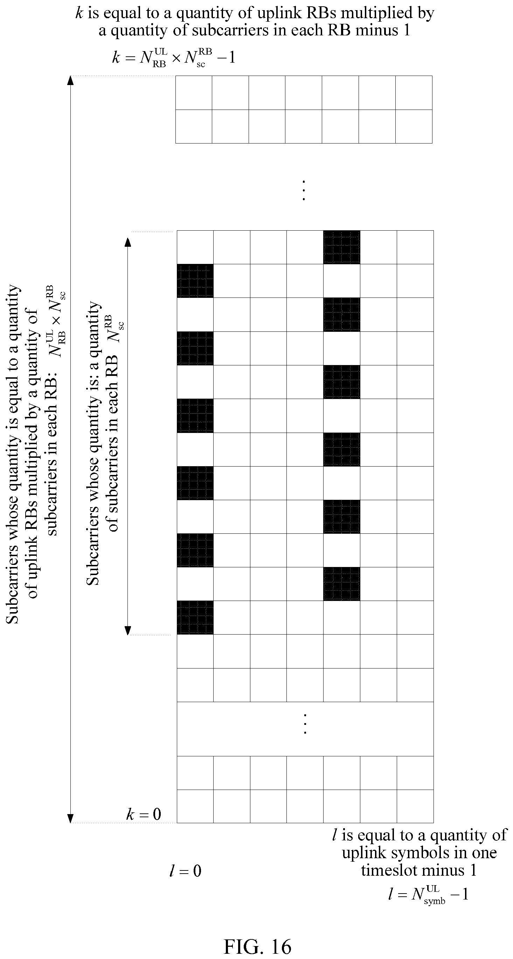

SRSs sent by the terminal 502 occupy same PRBs and different comb subcarriers on different symbols, as shown in FIG. 16. For a configuration of a comb subcarrier, refer to the descriptions in [5. Comb configuration], and for a configuration of PRBs on different symbols, refer to [4. Frequency domain configuration].

Symbol-level frequency hopping manner 3

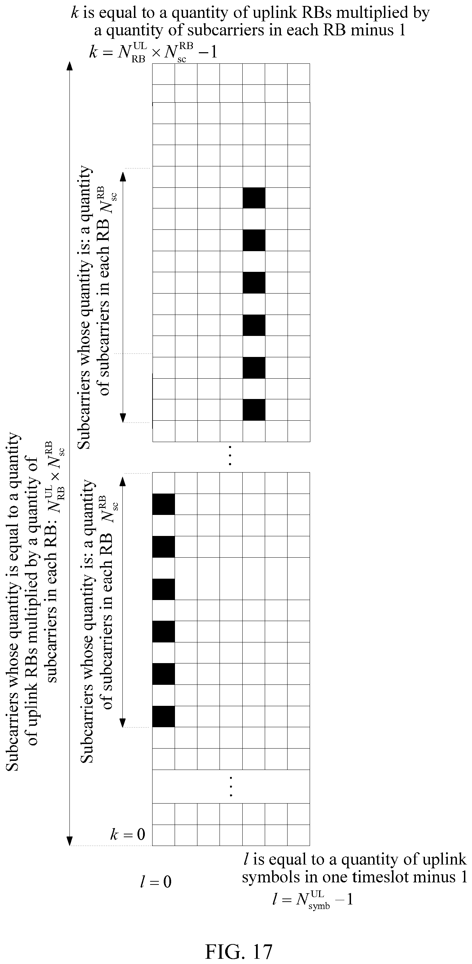

SRSs sent by the terminal 502 occupy different PRBs and same comb subcarriers on different symbols, as shown in FIG. 17. For a configuration of a comb subcarrier, refer to the descriptions in [5. Comb configuration], and for a configuration of PRBs on different symbols, refer to [4. Frequency domain configuration].

Symbol-level frequency hopping manner 4

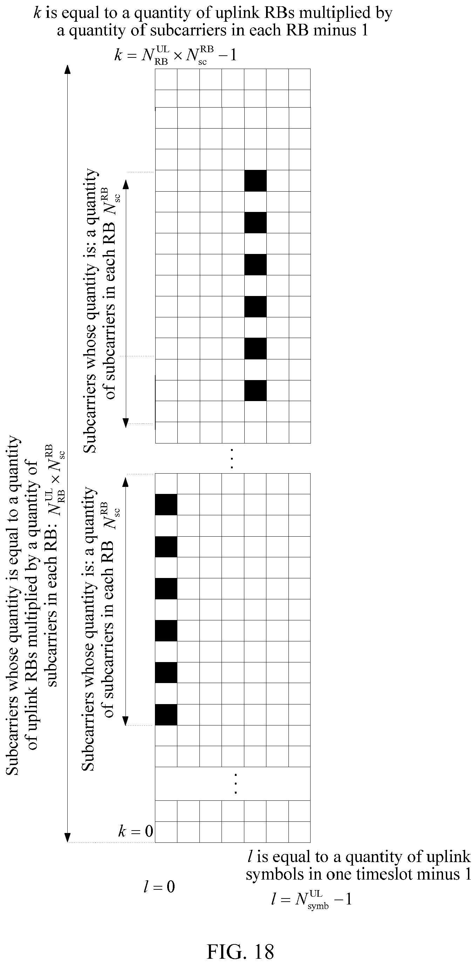

SRSs sent by the terminal 502 occupy different PRBs and different comb subcarriers on different symbols, as shown in FIG. 18. For a configuration of a comb subcarrier, refer to the descriptions in [5. Comb configuration], and for a configuration of PRBs on different symbols, refer to [4. Frequency domain configuration].

Base on a same invention idea, embodiments of the present invention further provide an SRS transmission method, and a terminal. Because the principle thereof for resolving a technical problem is similar to that of the wireless communications system provided, for implementation thereof, refer to implementation of the system, and repeated content is not described again.

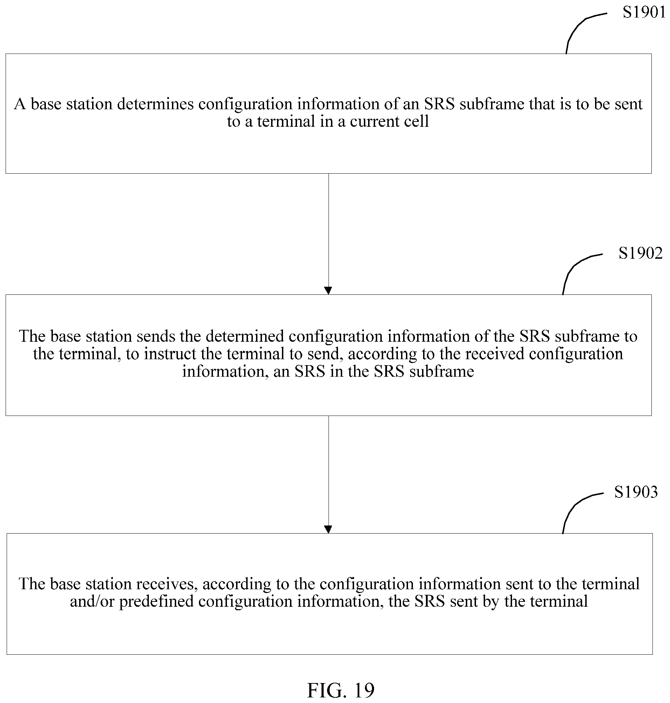

FIG. 19 is a flowchart of an SRS configuration method. As shown in FIG. 19, the method includes the following steps.

S1902: A base station sends configuration information of an SRS subframe to a terminal in a current cell, to instruct the terminal to send, according to the received configuration information, an SRS in the SRS subframe.

Optionally, before step S1902, the method further includes step S1901: The base station determines the configuration information of the SRS subframe that is to be sent to the terminal.

Optionally, after step S1902, the method further includes step S1903: The base station receives, according to the configuration information sent to the terminal and/or predefined configuration information, the SRS sent by the terminal.

The SRS subframe is an uplink subframe, or is a subframe in which a quantity of uplink symbols is not less than a quantity of downlink symbols; and

all uplink symbols in the SRS subframe can be used to carry an SRS.

For another optional implementation of the method, refer to the base station 501 in the wireless communications system provided in the embodiment of the present invention, and details are not described herein again.

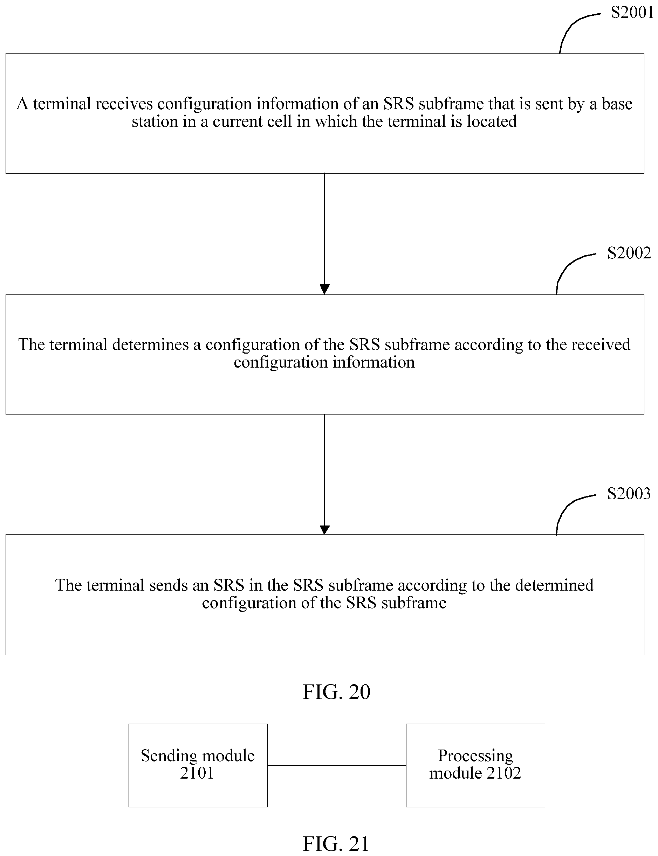

FIG. 20 is a flowchart of an SRS transmission method according to an embodiment of the present invention. As shown in FIG. 20, the method includes the following steps:

S2001: A terminal receives configuration information of an SRS subframe that is sent by a base station in a current cell in which the terminal is located.

S2002: The terminal determines a configuration of the SRS subframe according to the received configuration information.

S2003: The terminal sends an SRS in the SRS subframe according to the determined configuration of the SRS subframe.

The SRS subframe is an uplink subframe, or is a subframe in which a quantity of uplink symbols is not less than a quantity of downlink symbols; and

all uplink symbols in the SRS subframe can be used to carry an SRS.

For another optional implementation of the method, refer to the terminal 502 in the wireless communications system provided, and details are not described herein again.

FIG. 21 is a schematic structural diagram of a first base station. As shown in FIG. 21, the base station includes: a sending module 2101, configured to send configuration information of an SRS subframe to a terminal in a current cell, to instruct the terminal to send, according to the received configuration information, an SRS in the SRS subframe.

Optionally, the base station further includes: a processing module 2102, configured to determine configuration information of the SRS subframe of the terminal in the current cell.

The SRS subframe is an uplink subframe, or is a subframe in which a quantity of uplink symbols is not less than a quantity of downlink symbols; and

all uplink symbols in the SRS subframe can be used to carry an SRS.

For another optional implementation of the base station, refer to the base station 501 in the wireless communications system provided, and details are not described herein again.

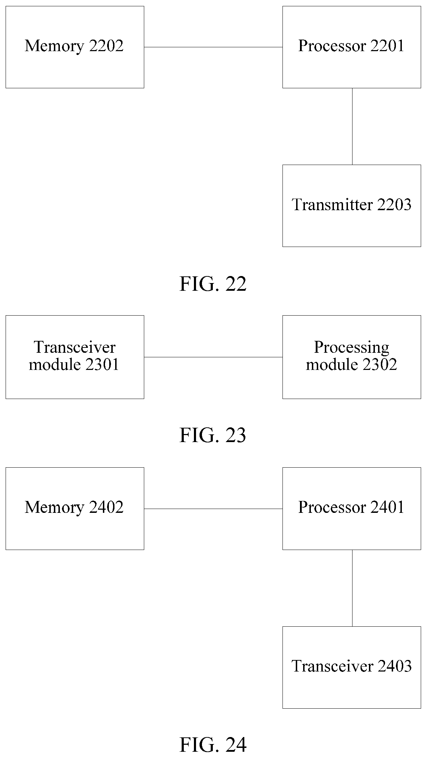

FIG. 22 is a schematic structural diagram of a second base station. As shown in FIG. 22, the base station includes: a processor 2201, a memory 2202, and a transmitter 2203.

The memory 2202 is configured to store an instruction.

The processor 2201 is configured to execute the instruction stored in the memory 2202, to control the transmitter 2203 to send a signal; and when the processor 2201 executes the instruction stored in the memory 2202, the base station is configured to complete the SRS configuration Z method.

The processor 2201 is further configured to receive and process, according to the configuration information, an SRS sent by a terminal. The configuration information includes predefined information in the base station and/or the configuration information that is sent by the base station to the terminal and that is described in the SRS configuration method.

For another optional implementation of the base station, refer to the foregoing base station 501, and details are not described herein again.

FIG. 23 is a schematic structural diagram of a first terminal. As shown in FIG. 23, the terminal includes:

a transceiver module 2301, configured to receive configuration information of an SRS subframe that is sent by a base station in a current cell in which the terminal is located; and

a processing module 2302, configured to determine a configuration of the SRS subframe according to the configuration information received by the transceiver module 2301.

The transceiver module 2301 is further configured to send an SRS in the SRS subframe according to the configuration of the SRS subframe determined by the processing module 2302.

The SRS subframe is an uplink subframe, or is a subframe in which a quantity of uplink symbols is not less than a quantity of downlink symbols; and

all uplink symbols in the SRS subframe can be used to carry an SRS.

For another optional implementation of the terminal, refer to the terminal 502 in the wireless communications system provided, and details are not described herein again.

FIG. 24 is a schematic structural diagram of a second terminal according to an embodiment of the present invention. As shown in FIG. 24, the terminal includes: a processor 2401, a memory 2402, and a transceiver 2403.

The memory 2402 is configured to store an instruction.

The processor 2401 is configured to execute the instruction stored in the memory 2402, to control the transceiver 2403 to send and receive a signal; and when the processor 2401 executes the instruction stored in the memory 2402, the terminal is configured to complete the SRS transmission method provided in the embodiment of the present invention.

For another optional implementation of the terminal, refer to the foregoing terminal 502, and details are not described herein again.

To sum up, compared with that an SRS is located only on a last symbol of an uplink subframe or is located in an UpPTS of a special subframe in a current LTE system, more transmission resources can be used to transmit an SRS in the embodiments of the present invention.

On one hand, as an antenna array of a base station becomes larger or a quantity of antennas of a terminal or a quantity of terminals increases, the current LTE system provides a relatively small quantity of resources that can be used to carry an SRS. By means of the solutions provided in the embodiments of the present invention, demands of the current LTE system for resources used to carry an SRS can be met.

On the other hand, by means of the solutions provided in the embodiments of the present invention, transmission requirements of a short-delay system, a millimeter-wave system, and the like can also be met, to implement accurate uplink channel quality measurement and channel estimation.

In addition, because an SRS subframe is configured separately, and all uplink symbols in the SRS subframe can be used to carry an SRS, a resource used to carry an SRS can be configured flexibly according to a quantity of terminals in a current system and requirements for channel measurement and estimation, so that implementation is more flexible.

In addition, when an SRS is multiplexed with a channel such as a PUSCH or a physical uplink control channel (Physical Uplink Control CHannel, PUCCH), for example, an SRS is multiplexed with a PUSCH channel, as shown in FIG. 4, to prevent a conflict between an SRS and these channels, a complex collision mechanism is generally introduced. For example, an SRS is dropped or some channels are dropped/punctured. Consequently, transmission performance of a channel deteriorates. If a PUCCH of a shortened (shortened) format or the like is used, a complex determining mechanism further needs to be introduced.

Optionally, by means of the solutions provided in the embodiments of the present invention, because relatively sufficient resources used to carry an SRS are provided, an SRS may be not multiplexed with a channel such as a PUSCH or a PUCCH. Therefore, use of a complex collision mechanism is avoided. Some channels may be not punctured or dropped, or an SRS may be not dropped, thereby ensuring transmission performance of a channel.

To sum up, a dedicated SRS subframe is provided in the embodiments of the present invention, and an SRS is transmitted in the dedicated SRS subframe, so that coverage of an SRS is improved, and a conflict with another channel is prevented, thereby reducing implementation complexity. In addition, because more transmission resources are provided, a capability of supporting multiple antennas can also be improved.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the scope of the present invention. The present invention is intended to cover these modifications and variations provided that they fall within the scope of protection defined by the following claims.

**Claims**

1. A sounding reference signal, SRS, transmission method, comprising:

   Receiving (S2001), by a terminal (502), configuration information of an SRS subframe that is from a base station (501) in a current cell in which a terminal (502) is located;
   Determining (S2002), by the terminal (502), a configuration of the SRS subframe according to the received configuration information; and
   Sending (S2003), by the terminal (502), an SRS in the SRS subframe according to the determined configuration of the SRS subframe, wherein
   the SRS subframe is an uplink subframe, or is a subframe in which a quantity of uplink symbols is not less than a quantity of downlink symbols; and
   all uplink symbols in the SRS subframe can be used to carry an SRS;
   **characterized in that**
   a symbol transmission mode of the terminal (502) in the SRS subframe comprises:

   sending SRSs on all symbols in the SRS subframe without multiplexing the SRSs with the Physical Uplink Shared Channel or the Physical Uplink Control Channel; and
   the configuration information further comprises: indication information used to indicate the symbol transmission mode of the terminal (502) in the SRS subframe.

2. The method according to claim 1, wherein

   the configuration information comprises: information used to indicate a value of a period $T_{SRS}^{cell}$ of the SRS subframe in the current cell and information used to indicate a value of an SRS subframe offset $T_{offset}^{cell}$, and the determining, by the terminal (502), a configuration of the SRS subframe according to the received configuration information comprises: determining, by the terminal (502), the period $T_{SRS}^{cell}$ of the SRS subframe in the current cell according to the received information used to indicate the value of the period $T_{SRS}^{cell}$ of the SRS subframe; determining, by the terminal (502), $T_{offset}^{cell}$ according to the information used to indicate the value of the SRS subframe offset $T_{offset}^{cell}$, and determinin, by the terminal (502),g according to a frame number of a radio frame, $T_{SRS}^{cell}$, and $T_{offset}^{cell}$, a location of the SRS subframe in the radio frame; or
   a location of the SRS subframe in a radio frame is predefined; and the sending, by the terminal (502), an SRS in the SRS subframe comprises: sending an SRS at the predefined location.

3. The method according to claim 1 or 2, wherein
the configuration information further comprises:

information used to indicate a value of $T_{SRS}^{ue}$ of the terminal (502); and

information used to indicate a value of an SRS subframe offset $T_{offset}^{ue}$ of the terminal (502); and
the determining a configuration of the SRS subframe according to the received configuration information comprises:

determining, by the terminal (502), according to a frame number of a radio frame, the period $T_{SRS}^{ue}$ of the SRS subframe of the terminal (502), and the SRS subframe offset $T_{offset}^{ue}$ of the terminal (502), a location, of the SRS subframe occupied by a sent SRS, in the radio frame.

4. The method according to any one of claims 1 to 3, wherein a frequency domain resource occupation manner of SRSs sent by the terminal (502) on symbols in the SRS subframe is one of the following manners:

SRSs sent by the terminal (502) on symbols in the SRS subframe occupy same frequency domain resources;
SRSs sent by the terminal (502) in timeslots in the SRS subframe occupy different frequency domain resources; or
SRSs sent by the terminal (502) on symbols in the SRS subframe occupy different frequency domain resources; and
the configuration information further comprises: indication information used to indicate the frequency domain resource occupation manner of SRSs sent by the terminal (502) on symbols in the SRS subframe; or
a frequency domain resource occupation manner of SRSs sent by the terminal (502) on symbols in the SRS subframe is predefined.

5. The method according to claim 4, wherein
if the frequency domain resource occupation manner of SRSs sent by the terminal (502) on symbols in the SRS subframe is that SRSs sent by the terminal (502) on symbols in the SRS subframe occupy same frequency domain resources,
the configuration information further comprises at least one of the following information:

cell public bandwidth information $C_{SRS}$, used to indicate a bandwidth occupied by an SRS that is sent by the terminal (502) in the current cell;
terminal (502) dedicated bandwidth information $B_{SRS}$ of the terminal (502), used to indicate: in a bandwidth indicated by the cell public bandwidth information $C_{SRS}$, a bandwidth occupied by an SRS sent by the terminal (502); or
frequency domain start location information $n_{RRC}$ of the terminal (502), used to indicate a frequency domain start location of a bandwidth occupied by an SRS sent by the terminal (502).

6. The method according to claim 4, wherein
if the terminal (502) determines that the frequency domain resource occupation manner of SRSs sent by the terminal (502) on symbols in the SRS subframe is that SRSs sent by the terminal (502) on different symbols in the SRS subframe occupy different frequency domain resources,
the configuration information further comprises at least one of the following information:

cell public bandwidth information $C_{SRS}$, used to indicate a bandwidth occupied by an SRS that is sent by the terminal (502) in the current cell;

terminal (502) dedicated bandwidth information $B_{SRS}^l$ of the terminal (502) on a symbol with a sequence number
$l$, used to indicate: in a bandwidth indicated by the cell public bandwidth information $C_{SRS}$, a bandwidth occupied by an SRS that is sent by the terminal (502) on the symbol with the sequence number $l$ ; or

frequency domain start location information $n_{RRC}^l$ of the terminal (502) on a symbol with a sequence number

*I* , used to indicate a frequency domain start location of a bandwidth occupied by an SRS that is sent by the terminal (502) on the symbol with the sequence number *I* in the SRS subframe.

7.  The method according to claim 6, wherein the determining, by the terminal (502), a configuration of the SRS subframe according to the received configuration information comprises:
    determining, by the terminal (502), according to the following information, a frequency domain resource occupied by an SRS that is sent on the symbol with the sequence number *I* in the SRS subframe, wherein at least one of the following information is obtained by the terminal (502) from a configuration message sent by the base station (501):

    the cell public bandwidth information $C_{SRS}$;

    the terminal (502) dedicated bandwidth information $B_{SRS}^{l}$ of the terminal (502) on the symbol with the sequence number *I*; or

    the frequency domain start location information $n_{RRC}^{l}$ of the terminal (502) on the symbol with the sequence number *I*.

8.  The method according to any one of claims 4 to 7, wherein
    the terminal sends an SRS by using a single antenna; the configuration information further comprises: information used to indicate a value of $n_{comb}$; and the determining, by the terminal (502), a configuration of the SRS subframe according to the received configuration information comprises: for each PRB on each symbol occupied by an SRS sent by the terminal (502), determining, by the terminal (502), occupied nonconsecutive subcarriers in the PRB on the symbol, wherein the occupied subcarriers have an interval of $n_{comb}$-1 subcarriers from each other; or
    SRSs are sent by using multiple antennas; the configuration information further comprises: information used to indicate a value of $n_{comb}$; and the determining a configuration of the SRS subframe according to the received configuration information comprises: for each PRB on one symbol occupied by an SRS sent by the terminal (502), determining occupied nonconsecutive subcarriers in the PRB on the symbol, wherein for one antenna used by the terminal (502), subcarriers occupied by SRSs that are sent by using the antenna have an interval of $n_{comb}$ subcarriers from each other.

9.  The method according to claim 8, wherein
    a manner in which SRSs sent by the terminal (502) on symbols in the SRS subframe occupy comb subcarriers is one of the following manners:

    for different symbols occupied by SRSs sent by the terminal (502), the terminal (502) occupies same comb subcarriers on the symbols; or
    for symbols that are occupied by SRSs sent by the terminal (502) and that are located in different timeslots, the terminal (502) occupies different comb subcarriers on the symbols; or
    for different symbols occupied by SRSs sent by the terminal (502), the terminal (502) occupies different comb subcarriers on the symbols; and
    the configuration information further comprises: indication information used to indicate the manner in which SRSs sent by the terminal (502) on symbols in the SRS subframe occupy comb subcarriers; or
    a manner in which SRSs sent by the terminal (502) on symbols in the SRS subframe occupy comb subcarriers is predefined.

10. The method according to any one of claims 1 to 9, wherein
    the terminal (502) sends SRSs by using multiple antennas;

    the configuration information further comprises: information used to indicate a value of a parameter $n_{SRS}^{cs}$; or a value of a parameter $n_{SRS}^{cs}$ of the terminal (502) is predefined, wherein $n_{SRS}^{cs}$ is a parameter used to determine a cyclic shift of an SRS sequence of an SRS that is sent by the terminal (502) on each antenna; and
    the determining, by the terminal (502), a configuration of the SRS subframe according to the received configuration information comprises:
    determining, by the terminal (502), according to the following formula, a cyclic shift $\alpha_{\tilde{p}}$ of an SRS sequence of an SRS that is sent by the terminal (502) on an antenna with a sequence number $\tilde{p}$:

$$\alpha_{\tilde{p}} = 2\pi \frac{n_{\mathrm{SRS}}^{\mathrm{cs},\tilde{p}}}{2N_{\mathrm{ap}}},$$

$$n_{\mathrm{SRS}}^{\mathrm{cs},\tilde{p}} = \left( n_{\mathrm{SRS}}^{\mathrm{cs}} + \frac{2N_{\mathrm{ap}}\tilde{p}}{N_{\mathrm{ap}}} \right) \bmod 2N_{\mathrm{ap}},$$

wherein $N_{\mathrm{ap}}$ is a quantity of antennas used by the terminal (502) to send SRSs, and $\tilde{p} \in \{0,1,...,N_{\mathrm{ap}}-1\}$.

11. The method according to any one of claims 1 to 10, wherein SRSs sent on different antennas by the terminal (502) that sends SRSs in the current cell by using multiple antennas occupy different symbols.

12. A terminal (502), comprising: a processor (2401), a memory (2402), and a transceiver (2403), wherein the memory (2402) is configured to store an instruction; the processor (2401) is configured to execute the instruction stored in the memory (2402), to control the transceiver (2403) to send and receive a signal; and when the processor (2401) executes the instruction stored in the memory (2402), the terminal (502) is configured to complete the method according to any one of claims 1 to 11.

13. A computer-readable storage medium comprising instructions which, when executed by a computer, any one of claims 1 to 11 is carried out.

**Patentansprüche**

1. Übertragungsverfahren für ein Klangreferenzsignal, SRS, umfassend:

Empfangen (S2001) von Konfigurationsinformation eines SRS-Subframes, die von einer Basisstation (501) kommt, durch ein Endgerät (502) in einer aktuellen Zelle, in der ein Endgerät (502) positioniert ist; Ermitteln (S2002) einer Konfiguration des SRS-Subframes durch das Endgerät (502) entsprechend der empfangenen Konfigurationsinformation; und Senden (S2003) eines SRS in dem SRS-Subframe durch das Endgerät (502) entsprechend der ermittelten Konfiguration des SRS-Subframes, wobei der SRS-Subframe ein Uplink-Subframe ist oder ein Subframe ist, in dem eine Menge von Uplink-Symbolen nicht geringer ist als eine Menge von Downlink-Symbolen; und alle Uplink-Symbole in dem SRS-Subframe zum Führen eines SRS verwendet werden können; **dadurch gekennzeichnet, dass** ein Symbolübertragungsmodus des Endgeräts (502) in dem SRS-Subframe umfasst:

Senden von SRS zu allen Symbolen in dem SRS-Subframe ohne Multiplexen der SRS mit dem physikalischen gemeinsam genutzten Uplink-Kanal oder dem physikalischen Uplink-Steuerkanal; und die Konfigurationsinformation ferner umfasst: Angabeinformation, verwendet zum Angeben des Symbolübertragungsmodus des Endgeräts (502) in dem SRS-Subframe.

2. Verfahren nach Anspruch 1, wobei die Konfigurationsinformation ferner umfasst: Information, verwendet zum Angeben eines Werts eines Zeitraums $T_{SRS}^{cell}$ des SRS-Subframes in der aktuellen Zelle, und Information, verwendet zum Angeben eines Werts eines SRS-Subframe-"Offsets" $T_{offset}^{cell}$; und das Ermitteln einer Konfiguration des SRS-Subframes durch das Endgerät (502) entsprechend der empfangenen Konfigurationsinformation umfasst: Ermitteln des Zeitraums $T_{SRS}^{cell}$ des SRS-Subframes in der aktuellen Zelle entsprechend der zur Angabe des Werts des Zeitraums $T_{SRS}^{cell}$ des SRS-Subframes verwendeten empfangenen Information; Ermitteln durch das Endgerät (502) von $T_{offset}^{cell}$ entsprechend der zur Angabe des Werts des SRS-Subframe-"Offsets" $T_{offset}^{cell}$ verwendeten Information; und Ermitteln durch das Endgerät (502), entsprechend einer Frame-Nummer eines Funkrahmens, $T_{SRS}^{cell}$ und $T_{offset}^{cell}$, einer Position des SRS-Subframes in dem Funkrahmen;

oder

eine Position des SRS-Subframes in einem Funkrahmen vordefiniert ist; und das Senden eines SRS in dem SRS-Subframe durch das Endgerät (502) umfasst: Senden eines SRS an der vordefinierten Position.

3. Verfahren nach Anspruch 1 oder 2, wobei
die Konfigurationsinformation ferner umfasst:

Information, verwendet zur Angabe eines Werts von $T_{SRS}^{ue}$ des Endgeräts (502); und

Information, verwendet zur Angabe eines Werts eines SRS-Subframe-"Offsets" $T_{offset}^{ue}$ des Endgeräts (502); und

das Ermitteln einer Konfiguration des SRS-Subframes entsprechend der empfangenen Konfigurationsinformation umfasst:
Ermitteln, durch das Endgerät (502) entsprechend einer Frame-Nummer eines Funkrahmens, des Zeitraums $T_{SRS}^{ue}$ des SRS-Subframes des Endgeräts (502) und des SRS-Subframe-"Offsets" $T_{offset}^{ue}$ des Endgeräts (502), einer Position des durch ein gesendetes SRS belegten SRS-Subframes in dem Funkrahmen.

4. Verfahren nach einem der Ansprüche 1 bis 3, wobei eine Frequenzdomänenressourcen-Belegungsweise von durch das Endgerät (502) über Symbole gesendeten SRS in dem SRS-Subframe eine der folgenden Weisen ist:

durch das Endgerät (502) über Symbole in dem SRS-Subframe gesendete SRS belegen gleiche Frequenzdomänenressourcen;
durch das Endgerät (502) in Zeitschlitzen in dem SRS-Subframe gesendete SRS belegen unterschiedliche Frequenzdomänenressourcen; oder
durch das Endgerät (502) über Symbole in dem SRS-Subframe gesendete SRS belegen unterschiedliche Frequenzdomänenressourcen; und
die Konfigurationsinformation ferner umfasst: Angabeinformation, verwendet zur Angabe der Frequenzdomänenressourcen-Belegungsweise von durch das Endgerät (502) über Symbole gesendeten SRS in dem SRS-Subframe; oder
eine Frequenzdomänenressourcen-Belegungsweise von durch das Endgerät (502) über Symbole gesendeten SRS in dem SRS-Subframe vordefiniert ist.

5. Verfahren nach Anspruch 4, wobei,
falls die Frequenzdomänenressourcen-Belegungsweise von durch das Endgerät (502) gesendeten SRS über Symbole in dem SRS-Subframe ist, dass durch das Endgerät (502) über Symbole gesendete SRS in dem SRS-Subframe gleiche Frequenzdomänenressourcen belegen,
die Konfigurationsinformation ferner mindestens eine der folgenden Informationen umfasst:

öffentliche Bandbreiteninformation $C_{SRS}$ von Zellen, verwendet zur Angabe einer Bandbreite, die durch ein SRS belegt wird, dass durch das Endgerät (502) in der aktuellen Zelle versandt wird;
dedizierte Endgerät (502)-Bandbreiteninformation $B_{SRS}$ des Endgeräts (502), verwendet, um in einer durch die öffentliche Bandbreiteninformation $C_{SRS}$ von Zellen angegebenen Bandbreite anzugeben: eine durch ein von dem Endgerät (502) gesendeten SRS belegte Bandbreite; oder
Frequenzdomänen-Startpositionsinformation $n_{RRC}$ des Endgeräts (502), verwendet zur Angabe einer Frequenzdomänen-Startposition einer Bandbreite, die durch ein von dem Endgerät (502) gesendetes SRS belegt ist.

6. Verfahren nach Anspruch 4, wobei,
falls das Endgerät (502) feststellt, dass die Frequenzdomänenressourcen-Belegungsweise von durch das Endgerät (502) über Symbole gesendeten SRS in dem SRS-Subframe ist, dass durch das Endgerät (502) über unterschiedliche Symbole gesendete SRS in dem SRS-Subframe unterschiedliche Frequenzdomänenressourcen belegen,
die Konfigurationsinformation ferner mindestens eine der folgenden Informationen umfasst:

öffentliche Bandbreiteninformation $C_{SRS}$ von Zellen, verwendet zur Angabe einer Bandbreite, die durch ein SRS belegt wird, das durch das Endgerät (502) in der aktuellen Zelle versandt wird;

dedizierte Endgerät-(502)-Bandbreiteninformation $B^l_{SRS}$ des Endgeräts (502) über ein Symbol mit einer Sequenznummer $l$, verwendet, um in einer durch die öffentliche Bandbreiteninformation $C_{SRS}$ von Zellen angegebenen Bandbreite anzugeben: eine Bandbreite, die durch ein SRS belegt ist, das von dem Endgerät (502) über das Symbol mit der Sequenznummer $l$ gesendet wird; oder

Frequenzdomänen-Startpositionsinformation $n^l_{RRC}$ des Endgeräts (502) über ein Symbol mit einer Sequenznummer $l$, verwendet zur Angabe einer Frequenzdomänen-Startposition einer Bandbreite, die durch ein SRS belegt ist, das von dem Endgerät (502) über das Symbol mit der Sequenznummer $l$ in dem SRS-Subframe gesendet wird.

**7.** Verfahren nach Anspruch 6, wobei das Ermitteln einer Konfiguration des SRS-Subframes durch das Endgerät (502) entsprechend der empfangenen Konfigurationsinformation umfasst:
Ermitteln, durch das Endgerät (502) entsprechend der folgenden Information, einer durch ein SRS, dass über das Symbol mit der Sequenznummer $l$ in dem SRS-Subframe gesendet wird, belegten Frequenzdomänenressource, wobei mindestens eine der folgenden Informationen durch das Endgerät (502) aus einer von der Basisstation (501) gesendeten Konfigurationsnachricht erhalten wird:

öffentliche Bandbreiteninformation $C_{SRS}$ von Zellen;

dedizierte Endgerät(502)-Bandbreiteninformation $B^l_{SRS}$ des Endgeräts (502) über das Symbol mit der Sequenznummer $l$; oder

Frequenzdomänen-Startpositionsinformation $n^l_{RRC}$ des Endgeräts (502) über das Symbol mit der Sequenznummer $l$.

**8.** Verfahren nach einem der Ansprüche 4 bis 7, wobei
das Endgerät ein SRS unter Verwendung einer einzelnen Antenne sendet; die Konfigurationsinformation ferner umfasst: verwendete Information, um einen Wert von $n_{comb}$ anzugeben; und das Ermitteln einer Konfiguration des SRS-Subframes durch das Endgerät (502) entsprechend der empfangenen Konfigurationsinformation umfasst: für jeden PRB zu jedem Symbol, belegt durch ein von dem Endgerät (502) gesendetes SRS, Ermitteln belegter nicht aufeinanderfolgender Unterträger in dem PRB zu dem Symbol durch das Endgerät (502), wobei die belegten Unterträger untereinander ein Intervall von $n_{comb}$-1 Unterträgern aufweisen; oder
SRS unter Verwendung mehrerer Antennen gesendet werden; die Konfigurationsinformation ferner umfasst: verwendete Information, um einen Wert von $n_{comb}$ anzugeben; und das Ermitteln einer Konfiguration des SRS-Subframes entsprechend der empfangenen Konfigurationsinformation umfasst: Für jeden PRB zu einem Symbol, belegt durch ein von dem Endgerät (502) gesendetes SRS, Ermitteln belegter nicht aufeinanderfolgender Unterträger in dem PRB zu dem Symbol, wobei für eine von dem Endgerät (502) verwendete Antenne Unterträger, belegt durch SRS, die unter Verwendung der Antenne gesendet werden, untereinander ein Intervall von $n_{comb}$ Unterträgern aufweisen.

**9.** Verfahren nach Anspruch 8, wobei
eine Weise, auf die durch das Endgerät (502) gesendete SRS über Symbole in dem SRS-Subframe Kamm-Unterträger belegen, eine der folgenden Weisen ist:

Für unterschiedliche Symbole, belegt durch von dem Endgerät (502) gesendete SRS, belegt das Endgerät (502) gleiche Kamm-Unterträger zu den Symbolen; oder
für Symbole, die durch von dem Endgerät (502) gesendete SRS belegt sind und die in unterschiedlichen Zeitschlitzen positioniert sind, belegt das Endgerät (502) unterschiedliche Kamm-Unterträger zu den Symbolen; oder
für unterschiedliche Symbole, belegt durch von dem Endgerät (502) gesendete SRS, belegt das Endgerät (502) unterschiedliche Kamm-Unterträger zu den Symbolen; und
die Konfigurationsinformation ferner umfasst: verwendete Angabeinformation zur Angabe der Weise, auf die durch das Endgerät (502) über Symbole gesendete SRS in dem SRS-Subframe Kamm-Unterträger belegen; oder
eine Weise, auf die durch das Endgerät (502) über Symbole gesendete SRS in dem SRS-Subframe Kamm-Unterträger belegen, vordefiniert ist.

**10.** Verfahren nach einem der Ansprüche 1 bis 9, wobei

das Endgerät (502) SRS unter Verwendung mehrerer Antennen sendet;

die Konfigurationsinformation ferner umfasst: verwendete Information zur Angabe eines Werts eines Parameters $n_{SRS}^{cs}$; oder ein Wert eines Parameters $n_{SRS}^{cs}$ des Endgeräts (502) vordefiniert ist, wobei $n_{SRS}^{cs}$ ein Parameter ist, der zum Ermitteln einer zyklischen Verschiebung einer SRS-Sequenz eines SRS verwendet wird, das durch das Endgerät (502) an jeder Antenne gesendet wird; und

das Ermitteln einer Konfiguration des SRS-Subframes durch das Endgerät (502) entsprechend der empfangenen Konfigurationsinformation umfasst:

Ermitteln, durch das Endgerät (502) gemäß der folgenden Formel, einer zyklischen Verschiebung $\alpha_{\bar{p}}$ einer SRS-Sequenz eines SRS, das durch das Endgerät (502) an einer Antenne mit einer Sequenznummer $\bar{p}$ gesendet wird:

$$\alpha_{\bar{p}} = 2\pi \frac{n_{SRS}^{cs.\bar{p}}}{2N_{ap}}$$

wobei $n_{SRS}^{cs.\tilde{p}} \left( n_{SRS}^{cs} + \frac{2N_{ap}\tilde{p}}{N_{ap}} \right) mod\, 2N_{ap},$ $N_{ap}$ eine Menge von durch das Endgerät (502) zum Senden von SRS verwendeten Antennen ist und $\tilde{p} \in \{0,1,...,N_{ap} - 1\}$.

**11.** Verfahren nach einem der Ansprüche 1 bis 10, wobei durch das Endgerät (502), das SRS in der aktuellen Zelle unter Verwendung mehrerer Antennen sendet, an unterschiedlichen Antennen gesendete SRS unterschiedliche Symbole belegen.

**12.** Endgerät (502), umfassend: einen Prozessor (2401), einen Speicher (2402) und einen Sendeempfänger (2403), wobei

der Speicher (2402) dafür ausgelegt ist, eine Anweisung zu speichern;

der Prozessor (2401) dafür ausgelegt ist, die in dem Speicher (2402) gespeicherte Anweisung auszuführen, um den Sendeempfänger (2403) zum Senden und Empfangen eines Signals zu steuern; und wenn der Prozessor (2401) die in dem Speicher (2402) gespeicherte Anweisung ausführt, das Endgerät (502) dafür ausgelegt ist, das Verfahren nach einem der Ansprüche 1 bis 11 abzuschließen.

**13.** Rechnerlesbares Speichermedium, umfassend Anweisungen, die bei Ausführung durch einen Rechner nach einem der Ansprüche 1 bis 11 ausgeführt werden.

**Revendications**

**1.** Procédé de transmission de signal de référence de sondage, SRS, comprenant :

la réception (S2001), par un terminal (502), d'informations de configuration d'une sous-trame de SRS qui provient d'une station de base (501) dans une cellule courante dans laquelle se trouve un terminal (502) ;

la détermination (S2002), par le terminal (502), d'une configuration de la sous-trame de SRS conformément aux informations de configuration reçues ; et

l'envoi (S2003), par le terminal (502), d'un SRS dans la sous-trame de SRS conformément à la configuration déterminée de la sous-trame de SRS, dans lequel la sous-trame de SRS est une sous-trame de liaison montante, ou est une sous-trame dans laquelle une quantité de symboles de liaison montante n'est pas inférieure à une quantité de symboles de liaison descendante ; et

tous les symboles de liaison montante dans la sous-trame de SRS peuvent être utilisés pour transporter un SRS ;

**caractérisé en ce que**

un mode de transmission de symbole du terminal (502) dans la sous-trame de SRS comprend :

l'envoi de SRS sur tous les symboles dans la sous-trame de SRS sans multiplexage des SRS par le canal physique partagé de liaison montante ou le canal physique de commande de liaison montante ; et

les informations de configuration comprennent en outre : des informations d'indication servant à indiquer le mode de transmission de symbole du terminal (502) dans la sous-trame de SRS.

**2.** Procédé selon la revendication 1, dans lequel

les informations de configuration comprennent : des informations servant à indiquer une valeur d'une période $T_{SRS}^{cell}$ de la sous-trame de SRS dans la cellule courante et des informations servant à indiquer une valeur d'un décalage de sous-trame de SRS $T_{offset}^{cell}$ ; et la détermination, par le terminal (502), d'une configuration de la sous-trame de SRS conformément aux informations de configuration reçues comprend : la détermination, par le terminal (502), de la période $T_{SRS}^{cell}$ de la sous-trame de SRS dans la cellule courante conformément aux informations reçues servant à indiquer la valeur de la période $T_{SRS}^{cell}$ de la sous-trame de SRS ; la détermination, par le terminal (502), de $\overline{T}_{offset}^{cell}$ conformément aux informations servant à indiquer la valeur du décalage de sous-trame de SRS $T_{offset}^{cell}$ ; et la détermination, par le terminal (502), conformément à un numéro de trame d'une trame radio, à $T_{SRS}^{cell}$ et à $T_{offset}^{cell}$, d'un emplacement de la sous-trame de SRS dans la trame radio ; ou un emplacement de la sous-trame de SRS dans une trame radio est prédéfini ; et l'envoi, par le terminal (502), d'un SRS dans la sous-trame de SRS comprend : l'envoi d'un SRS à l'emplacement prédéfini.

**3.** Procédé selon la revendication 1 ou 2, dans lequel les informations de configuration comprennent en outre :

des informations servant à indiquer une valeur de $T_{SRS}^{ue}$ du terminal (502) ; et

des informations servant à indiquer une valeur d'un décalage de sous-trame de SRS $T_{offset}^{ue}$ du terminal (502) ; et

la détermination d'une configuration de la sous-trame de SRS conformément aux informations de configuration reçues comprend :

la détermination, par le terminal (502), conformément à un numéro de trame d'une trame radio, à la période $T_{SRS}^{ue}$ de la sous-trame de SRS du terminal (502) et au décalage de sous-trame de SRS $T_{offset}^{ue}$ du terminal (502), d'un emplacement de la sous-trame de SRS occupé par un SRS envoyé dans la trame radio.

**4.** Procédé selon l'une quelconque des revendications 1 à 3, dans lequel une occupation de ressources de domaine fréquentiel des SRS envoyés par le terminal (502) sur des symboles dans la sous-trame de SRS est l'une des suivantes :

les SRS envoyés par le terminal (502) sur des symboles dans la sous-trame de SRS occupent les mêmes ressources de domaine fréquentiel ;
les SRS envoyés par le terminal (502) dans des créneaux temporels de la sous-trame de SRS occupent des ressources de domaine fréquentiel différentes ; ou
les SRS envoyés par le terminal (502) sur des symboles dans la sous-trame de SRS occupent des ressources de domaine fréquentiel différentes ; et
les informations de configuration comprennent en outre : des informations d'indication servant à indiquer l'occupation de ressources de domaine fréquentiel des SRS envoyés par le terminal (502) sur des symboles dans la sous-trame de SRS ; ou
une occupation de ressources de domaine fréquentiel des SRS envoyés par le terminal (502) sur des symboles dans la sous-trame de SRS est prédéfinie.

**5.** Procédé selon la revendication 4, dans lequel
si l'occupation de ressources de domaine fréquentiel des SRS envoyés par le terminal (502) sur des symboles dans la sous-trame de SRS est telle que les SRS envoyés par le terminal (502) sur des symboles dans la sous-trame de SRS occupent les mêmes ressources de domaine fréquentiel,
les informations de configuration comprennent en outre au moins l'une des informations suivantes :

des informations de bande passante publique de cellule $C_{SRS}$ servant à indiquer une bande passante occupée par un SRS envoyé par le terminal (502) dans la cellule courante ;
des informations de bande passante dédiée au terminal (502) $B_{SRS}$ du terminal (502) servant à indiquer : dans une bande passante indiquée par les informations de bande passante publique de cellule $C_{SRS}$, une bande passante occupée par un SRS envoyé par le terminal (502) ; ou

des informations d'emplacement de départ de domaine fréquentiel $n_{rrc}$ du terminal (502) servant à indiquer un emplacement de départ de domaine fréquentiel d'une bande passante occupée par un SRS envoyé par le terminal (502).

6. Procédé selon la revendication 4, dans lequel
si le terminal (502) détermine que l'occupation de ressources de domaine fréquentiel des SRS envoyés par le terminal (502) sur des symboles dans la sous-trame de SRS est telle que les SRS envoyés par le terminal (502) sur différents symboles dans la sous-trame de SRS occupent des ressources de domaine fréquentiel différentes, les informations de configuration comprennent en outre au moins l'une des informations suivantes :

des informations de bande passante publique de cellule $C_{SRS}$ servant à indiquer une bande passante occupée par un SRS envoyé par le terminal (502) dans la cellule courante ;

des informations de bande passante dédiée au terminal (502) $B^l_{SRS}$ du terminal (502) sur un symbole avec un numéro de séquence $l$ servant à indiquer : dans une bande passante indiquée par les informations de bande passante publique de cellule $C_{SRS}$, une bande passante occupée par un SRS envoyé par le terminal (502) sur le symbole avec le numéro de séquence $l$ ; ou

des informations d'emplacement de départ de domaine fréquentiel $n^l_{rrc}$ du terminal (502) sur un symbole avec un numéro de séquence $l$ servant à indiquer un emplacement de départ de domaine fréquentiel d'une bande passante occupée par un SRS envoyé par le terminal (502) sur le symbole avec le numéro de séquence $l$ dans la sous-trame de SRS.

7. Procédé selon la revendication 6, dans lequel la détermination, par le terminal (502), d'une configuration de la sous-trame de SRS conformément aux informations de configuration reçues comprend :
la détermination, par le terminal (502), conformément aux informations suivantes, d'une ressource de domaine fréquentiel occupée par un SRS envoyé sur le symbole avec le numéro de séquence $l$ dans la sous-trame de SRS, dans lequel au moins l'une des informations suivantes est obtenue par le terminal (502) à partir d'un message de configuration envoyé par la station de base (501) :

les informations de bande passante publique de cellule $C_{SRS}$ ;

les informations de bande passante dédiée au terminal (502) $B^l_{SRS}$ du terminal (502) sur le symbole avec le numéro de séquence $l$ ; ou

les informations d'emplacement de départ de domaine fréquentiel $n^l_{rrc}$ du terminal (502) sur le symbole avec le numéro de séquence $l$.

8. Procédé selon l'une quelconque des revendications 4 à 7, dans lequel le terminal envoie un SRS au moyen d'une seule antenne ; les informations de configuration comprennent en outre : des informations servant à indiquer une valeur de $n_{comb}$ ; et la détermination, par le terminal (502), d'une configuration de la sous-trame de SRS conformément aux informations de configuration reçues comprend :

pour chaque PRB sur chaque symbole occupé par un SRS envoyé par le terminal (502), la détermination, par le terminal (502), de sous-porteuses non consécutives occupées dans le PRB sur le symbole, dans lequel les sous-porteuses occupées présentent un intervalle de $n_{comb}$ - 1 sous-porteuse les unes avec les autres ; ou

les SRS sont envoyés au moyen de plusieurs antennes ; les informations de configuration comprennent en outre :

des informations servant à indiquer une valeur de $n_{comb}$ ; et la détermination d'une configuration de la sous-trame de SRS conformément aux informations de configuration reçues comprend : pour chaque PRB sur un symbole occupé par un SRS envoyé par le terminal (502), la détermination de sous-porteuses non consécutives occupées dans le PRB sur le symbole, dans lequel pour une antenne utilisée par le terminal (502), des sous-porteuses occupées par des SRS envoyés au moyen de l'antenne présentent un intervalle de $n_{comb}$ sous-porteuse les unes avec les autres.

9. Procédé selon la revendication 8, dans lequel
une occupation par les SRS envoyés par le terminal (502) sur des symboles dans la sous-trame de SRS des sous-porteuses de filtrage est l'une des suivantes :

pour des symboles différents occupés par les SRS envoyés par le terminal (502), le terminal (502) occupe les mêmes sous-porteuses de filtrage sur les symboles ; ou

pour des symboles occupés par les SRS envoyés par le terminal (502) et qui sont situés dans des créneaux temporels différents, le terminal (502) occupe des sous-porteuses de filtrage différentes sur les symboles ; ou

pour des symboles différents occupés par les SRS envoyés par le terminal (502), le terminal (502) occupe des sous-porteuses de filtrage différentes sur les symboles ; et

les informations de configuration comprennent en outre : des informations d'indication servant à indiquer l'occupation par les SRS envoyés par le terminal (502) sur des symboles dans la sous-trame de SRS des sous-porteuses de filtrage ; ou

une occupation par les SRS envoyés par le terminal (502) sur des symboles dans la sous-trame de SRS des sous-porteuses de filtrage est prédéfinie.

**10.** Procédé selon l'une quelconque des revendications 1 à 9, dans lequel le terminal (502) envoie des SRS au moyen de plusieurs antennes ;

les informations de configuration comprennent en outre : des informations servant à indiquer une valeur d'un paramètre $n_{SRS}^{cs}$ ; ou une valeur d'un paramètre $n_{SRS}^{cs}$ du terminal (502) est prédéfinie, dans lequel $n_{SRS}^{cs}$ est un paramètre servant à déterminer un décalage cyclique d'une séquence de SRS d'un SRS envoyé par le terminal (502) sur chaque antenne ; et

la détermination, par le terminal (502), d'une configuration de la sous-trame de SRS conformément aux informations de configuration reçues comprend :

la détermination, par le terminal (502), conformément à la formule qui suit, d'un décalage cyclique $\alpha_{\tilde{p}}$ d'une séquence de SRS d'un SRS envoyé par le terminal (502) sur une antenne avec un numéro de séquence $\tilde{p}$ :

$$\alpha_{\tilde{p}} = 2\pi \frac{n_{\mathrm{SRS}}^{\mathrm{cs},\tilde{p}}}{2N_{\mathrm{ap}}}$$

$$n_{\mathrm{SRS}}^{\mathrm{cs},\tilde{p}} = \left( n_{\mathrm{SRS}}^{\mathrm{cs}} + \frac{2N_{\mathrm{ap}}\tilde{p}}{N_{\mathrm{ap}}} \right) \bmod 2N_{\mathrm{ap}}, \quad N_{\mathrm{ap}}$$

dans laquelle $N_{\mathrm{ap}}$ est une quantité d'antennes utilisées par le terminal (502) pour envoyer les SRS, et $\tilde{p} \in \{0, 1, ..., N_{\mathrm{ap}} - 1\}$.

**11.** Procédé selon l'une quelconque des revendications 1 à 10, dans lequel les SRS envoyés sur différentes antennes par le terminal (502) qui envoie les SRS dans la cellule courante au moyen de plusieurs antennes occupent des symboles différents.

**12.** Terminal (502), comprenant : un processeur (2401), une mémoire (2402) et un émetteur-récepteur (2403), dans lequel

la mémoire (2402) est configurée pour stocker une commande ;

le processeur (2401) est configuré pour exécuter la commande stockée dans la mémoire (2402), pour commander l'émetteur-récepteur (2403) pour envoyer et recevoir un signal ; et lorsque le processeur (2401) exécute la commande stockée dans la mémoire (2402), le terminal (502) est configuré pour exécuter le procédé selon l'une quelconque des revendications 1 à 11.

**13.** Support de stockage lisible par ordinateur comprenant des commandes qui, lorsqu'elles sont exécutées par un ordinateur, exécutent l'une quelconque des revendications 1 à 11.

SRS period (N subframes,
N is a positive integer)

One subframe

One symbol

SRS

FIG. 1A

One radio frame, $T_f = 307200 T_s = 10$ ms

One timeslot, $T_{slot} = 15360 T_s = 0.5$ ms

| #0 | #1 | #2 | #3 | ............... | #18 | #19 |
|----|----|----|----|----|----|----|

One subframe

FIG. 1B

$X_0^{SRS}$

$X_1^{SRS}$

$X_{M-1}^{SRS}$

OFDM
modulator

One subframe

FIG. 2

SRS non-frequency
hopping

Frequency

Time

One subframe

SRS frequency
hopping

One subframe

FIG. 3

FIG. 4

FIG. 5

$k$ is equal to a quantity of uplink RBs multiplied by a quantity of subcarriers in each RB minus 1

$$k = N_{RB}^{UL} \times N_{sc}^{RB} - 1$$

Subcarriers whose quantity is equal to a quantity of uplink RBs multiplied by a quantity of subcarriers in each RB: $N_{RB}^{UL} \times N_{sc}^{RB}$

Subcarriers whose quantity is: a quantity of subcarriers in each RB $N_{sc}^{RB}$

$k = 0$

$l = 0$

$l$ is equal to a quantity of uplink symbols in one timeslot minus 1

$$l = N_{symb}^{UL} - 1$$

FIG. 6

$k$ is equal to a quantity of uplink RBs multiplied by a quantity of subcarriers in each RB minus 1

$$k = N_{\mathrm{RB}}^{\mathrm{UL}} \times N_{\mathrm{sc}}^{\mathrm{RB}} - 1$$

Subcarriers whose quantity is equal to a quantity of uplink RBs multiplied by a quantity of subcarriers in each RB: $N_{\mathrm{RB}}^{\mathrm{UL}} \times N_{\mathrm{sc}}^{\mathrm{RB}}$

Subcarriers whose quantity is: a quantity of subcarriers in each RB $N_{\mathrm{sc}}^{\mathrm{RB}}$

$k = 0$

$l = 0$

$l$ is equal to a quantity of uplink symbols in one timeslot minus 1

$$l = N_{\mathrm{symb}}^{\mathrm{UL}} - 1$$

FIG. 7

$k$ is equal to a quantity of uplink RBs multiplied by a quantity of subcarriers in each RB minus 1

$$k = N_{RB}^{UL} \times N_{sc}^{RB} - 1$$

Subcarriers whose quantity is equal to a quantity of uplink RBs multiplied by a quantity of subcarriers in each RB: $N_{RB}^{UL} \times N_{sc}^{RB}$

Subcarriers whose quantity is: a quantity of subcarriers in each RB $N_{sc}^{RB}$

$k = 0$

$l = 0$

$l$ is equal to a quantity of uplink symbols in one timeslot minus 1

$$l = N_{symb}^{UL} - 1$$

FIG. 8

50

$k$ is equal to a quantity of uplink RBs multiplied by a quantity of subcarriers in each RB minus 1

$$k = N_{RB}^{UL} \times N_{sc}^{RB} - 1$$

$k = 0$

$l = 0$

$l$ is equal to a quantity of uplink symbols in one timeslot minus 1

$$l = N_{symb}^{UL} - 1$$

FIG. 9

$k$ is equal to a quantity of uplink RBs multiplied by a quantity of subcarriers in each RB minus 1

$$k = N_{RB}^{UL} \times N_{sc}^{RB} - 1$$

Subcarriers whose quantity is equal to a quantity of uplink RBs multiplied by a quantity of subcarriers in each RB: $N_{RB}^{UL} \times N_{sc}^{RB}$

Subcarriers whose quantity is: a quantity of subcarriers in each RB $N_{sc}^{RB}$

$k = 0$

$l = 0$

$l$ is equal to a quantity of uplink symbols in one timeslot minus 1

$$l = N_{symb}^{UL} - 1$$

UE 1,P1

UE 1,P2

UE 1,P3

UE 1,P4

or

UE 1

UE 2

UE 3

UE 4

FIG. 10

FIG. 11

$k$ is equal to a quantity of uplink RBs multiplied by a quantity of subcarriers in each RB minus 1

$$k = N_{RB}^{UL} \times N_{sc}^{RB} - 1$$

Subcarriers whose quantity is equal to a quantity of uplink RBs multiplied by a quantity of subcarriers in each RB: $N_{RB}^{UL} \times N_{sc}^{RB}$

Subcarriers whose quantity is: a quantity of subcarriers in each RB $N_{sc}^{RB}$

$k = 0$

$l = 0$

$l$ is equal to a quantity of uplink symbols in one timeslot minus 1

$$l = N_{symb}^{UL} - 1$$

FIG. 12

$k$ is equal to a quantity of uplink RBs multiplied by a quantity of subcarriers in each RB minus 1

$$k = N_{RB}^{UL} \times N_{sc}^{RB} - 1$$

Subcarriers whose quantity is equal to a quantity of uplink RBs multiplied by a quantity of subcarriers in each RB: $N_{RB}^{UL} \times N_{sc}^{RB}$

Subcarriers whose quantity is: a quantity of subcarriers in each RB $N_{sc}^{RB}$

Subcarriers whose quantity is: a quantity of subcarriers in each RB $N_{sc}^{RB}$

$k = 0$

$l = 0$

$l$ is equal to a quantity of uplink symbols in one timeslot minus 1

$$l = N_{symb}^{UL} - 1$$

FIG. 13

$k$ is equal to a quantity of uplink RBs multiplied by a quantity of subcarriers in each RB minus 1

$$k = N_{RB}^{UL} \times N_{sc}^{RB} - 1$$

Subcarriers whose quantity is: a quantity of subcarriers in each RB $N_{sc}^{RB}$

Subcarriers whose quantity is equal to a quantity of uplink RBs multiplied by a quantity of subcarriers in each RB: $N_{RB}^{UL} \times N_{sc}^{RB}$

Subcarriers whose quantity is: a quantity of subcarriers in each RB $N_{sc}^{RB}$

$k = 0$

$l = 0$

$l$ is equal to a quantity of uplink symbols in one timeslot minus 1

$$l = N_{symb}^{UL} - 1$$

FIG. 14

56

k is equal to a quantity of uplink RBs multiplied by a quantity of subcarriers in each RB minus 1

$$k = N_{\text{RB}}^{\text{UL}} \times N_{\text{sc}}^{\text{RB}} - 1$$

Subcarriers whose quantity is equal to a quantity of uplink RBs multiplied by a quantity of subcarriers in each RB: $N_{\text{RB}}^{\text{UL}} \times N_{\text{sc}}^{\text{RB}}$

Subcarriers whose quantity is: a quantity of subcarriers in each RB $N_{\text{sc}}^{\text{RB}}$

$k = 0$

$l = 0$

$l$ is equal to a quantity of uplink symbols in one timeslot minus 1

$$l = N_{\text{symb}}^{\text{UL}} - 1$$

FIG. 15

$k$ is equal to a quantity of uplink RBs multiplied by a quantity of subcarriers in each RB minus 1

$$k = N_{RB}^{UL} \times N_{sc}^{RB} - 1$$

Subcarriers whose quantity is equal to a quantity of uplink RBs multiplied by a quantity of subcarriers in each RB: $N_{RB}^{UL} \times N_{sc}^{RB}$

Subcarriers whose quantity is: a quantity of subcarriers in each RB $N_{sc}^{RB}$

$k = 0$

$l = 0$

$l$ is equal to a quantity of uplink symbols in one timeslot minus 1

$$l = N_{symb}^{UL} - 1$$

FIG. 16

$k$ is equal to a quantity of uplink RBs multiplied by a quantity of subcarriers in each RB minus 1

$$k = N_{RB}^{UL} \times N_{sc}^{RB} - 1$$

Subcarriers whose quantity is equal to a quantity of uplink RBs multiplied by a quantity of subcarriers in each RB: $N_{RB}^{UL} \times N_{sc}^{RB}$

Subcarriers whose quantity is: a quantity of subcarriers in each RB $N_{sc}^{RB}$

Subcarriers whose quantity is: a quantity of subcarriers in each RB $N_{sc}^{RB}$

$k = 0$

$l = 0$

$l$ is equal to a quantity of uplink symbols in one timeslot minus 1

$$l = N_{symb}^{UL} - 1$$

FIG. 17

*k* is equal to a quantity of uplink RBs multiplied by a quantity of subcarriers in each RB minus 1

$$k = N_{RB}^{UL} \times N_{sc}^{RB} - 1$$

Subcarriers whose quantity is equal to a quantity of uplink RBs multiplied by a quantity of subcarriers in each RB: $N_{RB}^{UL} \times N_{sc}^{RB}$

Subcarriers whose quantity is: a quantity of subcarriers in each RB $N_{sc}^{RB}$

Subcarriers whose quantity is: a quantity of subcarriers in each RB $N_{sc}^{RB}$

$k = 0$

$l = 0$

*l* is equal to a quantity of uplink symbols in one timeslot minus 1

$$l = N_{symb}^{UL} - 1$$

FIG. 18

S1901

A base station determines configuration information of an SRS subframe that is to be sent to a terminal in a current cell

S1902

The base station sends the determined configuration information of the SRS subframe to the terminal, to instruct the terminal to send, according to the received configuration information, an SRS in the SRS subframe

S1903

The base station receives, according to the configuration information sent to the terminal and/or predefined configuration information, the SRS sent by the terminal

FIG. 19

S2001

A terminal receives configuration information of an SRS subframe that is sent by a base station in a current cell in which the terminal is located

S2002

The terminal determines a configuration of the SRS subframe according to the received configuration information

S2003

The terminal sends an SRS in the SRS subframe according to the determined configuration of the SRS subframe

FIG. 20

Sending module 2101 — Processing module 2102

FIG. 21

| Memory 2202 | Processor 2201 |

| Transmitter 2203 |

FIG. 22

| Transceiver module 2301 | Processing module 2302 |

FIG. 23

| Memory 2402 | Processor 2401 |

| Transceiver 2403 |

FIG. 24

**REFERENCES CITED IN THE DESCRIPTION**

**Patent documents cited in the description**

- US 20120014349 A1
- US 20140112168 A1

- EP 3282663 A1

**Non-patent literature cited in the description**

- Views on SRC capacity enhancements in Rel. 10. **HUAWEI.** 3GPP Draft; R1-101076. 3RD Genenera-tion Partnership Project, 22 February 2010